(19) **Europäisches Patentamt**
**European Patent Office**
**Office européen des brevets**

(11) **EP 4 435 466 A1**

(12) **EUROPEAN PATENT APPLICATION**
published in accordance with Art. 153(4) EPC

(43) Date of publication:
**25.09.2024 Bulletin 2024/39**

(21) Application number: **22895716.3**

(22) Date of filing: **18.11.2022**

(51) International Patent Classification (IPC):
**G01S 7/481** (2006.01)    **G02B 3/00** (2006.01)

(52) Cooperative Patent Classification (CPC):
**G01S 7/481; G02B 3/00**

(86) International application number:
**PCT/JP2022/042921**

(87) International publication number:
**WO 2023/090435 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.11.2021 JP 2021188550**

(71) Applicant: **Scivax Corporation
Kawasaki-shi, Kanagawa 212-0032 (JP)**

(72) Inventors:
• **NAWATA Akifumi
Kawasaki-shi Kanagawa 212-0032 (JP)**

• **NAKAMURA Tomonori
Kawasaki-shi Kanagawa 212-0032 (JP)**
• **YANG Zhe
Kawasaki-shi Kanagawa 212-0032 (JP)**
• **NOZAKI Takeshi
Kawasaki-shi Kanagawa 212-0032 (JP)**
• **TANAKA Satoru
Kawasaki-shi Kanagawa 212-0032 (JP)**

(74) Representative: **Gille Hrabal
Partnerschaftsgesellschaft mbB
Patentanwälte
Brucknerstraße 20
40593 Düsseldorf (DE)**

(54) **OPTICAL SYSTEM DEVICE AND METHOD FOR MANUFACTURING OPTICAL ELEMENT**

(57)    An optical system device capable of emitting light with a high contrast, and a method for manufacturing the same are provided. An optical system device includes an optical element 2 including lenses which have a focal distance f, allow light with a wavelength $\lambda$ to pass through, and are arranged periodically at a pitch P, an emitting unit 1 including a light source emitting the light with the wavelength $\lambda$ to the plurality of lenses, a bottom member fastening the emitting unit, a side member fastening the optical element and the bottom member with each other, and either one of or both of an upper-end-side bonding layer bonding the optical element and an upper end of the side member with each other or a lower-end-side bonding layer bonding the bottom member and a lower end of the side member. When a distance between the emitting unit and a focal position of the optical element is defined as $L_1$, n is a natural number greater than equal to 1, the distance $L_1$ satisfies the following formula.

$$\frac{n\,P^2}{2\lambda} - f < L_1 < \frac{n\,P^2}{2\lambda} + f$$

FIG. 1

EP 4 435 466 A1

**Description**

TECHNICAL FIELD

The present disclosure relates to an optical system device and a method for manufacturing an optical system device.

BACKGROUND ART

Three-dimensional measurement sensors that utilize a Time Of Flight (TOF) scheme are now to be applied to portable devices, vehicles, and robots, etc. such a sensor measures a distance from an object based on a time until light emitted by a light source to an object is reflected and returns. When light from the light source is emitted uniformly to the predetermined region of the object, the distance at each point subjected to light emission can be measured, and thus the three-dimensional structure of the object can be detected.

The above-described sensor system includes a light emitting unit that emits light to an object, a camera unit that detects reflected light from each point on the object, and an arithmetic unit that calculates a distance from the object in accordance with a signal according to the light received by the camera unit.

As for the camera unit and the arithmetic unit, already-existing CMOS imager and CPU are applicable, respectively, and thus the unique component of the above-described system is the light emitting unit that includes a laser and an optical filter. In particular, the distinguishing component of the above-described system is a diffusing filter which shapes a beam by causing laser light to pass through a microlens array, and which cause the light to be emitted uniformly within a controlled region to an object.

Conventional diffusing filters have a technical problem such that the variability occurs in light intensity due to the adverse effect of diffraction since the microlens array employs a periodic structure. Hence, in order to suppress such a variability, an attempt such as to place each lens at random is made (e.g., Patent Document 1).

Conversely, the TOF has needs for long-distance measurement, and emitted light needs an intensity that enables such a long-distance measurement. However, since the microlens array having undergone the random placement has the high uniformity of emitted light but decreases the intensity thereof, it is not suitable for such a long-distance measurement.

Hence, as for a scheme capable of processing intensive light signals while saving electric power, a scheme to emit a dot pattern and to execute a three-dimensional measurement from the Time Of Flight of such light is now examined.

Conventionally, an optical system device that converts incident light into a dot pattern by utilizing the Lau effect is known (e.g., Non-patent Document 1). This includes a diffraction grating with a predetermined pitch P, and a light source, and when the wavelength of light from the light source is defined as $\lambda$, and n is a natural number that is greater than or equal to 1, placement is made in such a way that a distance $L_0$ between the diffraction grating and the light source satisfies the following formula A.

$$[\text{Formula A}]$$

$$L_0 = \frac{n\, P^2}{2\lambda}$$

Moreover, replacement of the diffraction grating with a microlens is now also examined (e.g., Patent Document 2).

CITATION LIST

PATENT LITERATURES

Patent Document 1: JP 2006-500621A
Patent Document 2: WO 2017/131585A
Non-patent Document 1: H. Hamam, Lau Array Illuminator, Applied Optics, 43(14): 2888-2894, May 10, 2004.

## SUMMARY OF INVENTION

### TECHNICAL PROBLEM

However, replacement of the diffraction grating with a microlens has a technical disadvantage such that the contrast of the dot pattern decreases. Moreover, there is also a technical disadvantage such that it is difficult to adjust a distance between a light source and a microlens.

Hence, an objective according to the present disclosure is to provide an optical system device capable of emitting light with a high contrast, and a method for manufacturing the same.

### SOLUTION TO PROBLEM

In order to accomplish the above objective, an optical system device according to the present disclosure includes:

an optical element that includes lenses which have a focal distance f, allow light with a wavelength $\lambda$ to pass through, and are arranged periodically at a pitch P;
an emitting unit that includes a light source which emits the light with the wavelength $\lambda$ to the plurality of lenses;
a bottom member that fastens the emitting unit;
a side member that fastens the optical element and the bottom member with each other; and
either one of or both of an upper-end-side bonding layer that bonds the optical element and an upper end of the side member with each other or a lower-end-side bonding layer that bonds the bottom member and a lower end of the side member,
in which when a distance between the emitting unit and a focal position of the optical element is defined as $L_1$, n is a natural number greater than equal to 1, the distance $L_1$ satisfies the following formula.

$$\frac{n\,P^2}{2\lambda} - f < L_1 < \frac{n\,P^2}{2\lambda} + f$$

In this case, it is preferable that, when a height from an upper surface of the bottom member to an emitting surface of the emitting unit is defined as $H_0$, a height $H_1$ from the upper surface of the bottom member to the upper end of the side member should satisfy the following formula.

$$\frac{(n-1)\,P^2}{2\lambda} + f + H_0 < H_1 < \frac{n\,P^2}{2\lambda} + f + H_0$$

It is preferable that the height $H_1$ should satisfy the following formula, and the thickness $\delta 1$ of the upper-end-side bonding layer should be $0 < \delta 1 < f$.

$$\frac{n\,P^2}{2\lambda} + H_0 < H_1 < \frac{n\,P^2}{2\lambda} + f + H_0$$

It is preferable that the light source should be a VCSEL that has a resonator length t which is a converted distance in a medium between the emitting unit and the optical element, the height $H_1$ should satisfy the following formula, and the thickness 61 of the upper-end-side bonding layer should be $0 < \delta 1 < t$.

$$\frac{n\,P^2}{2\lambda} + f - t + H_0 < H_1 < \frac{n\,P^2}{2\lambda} + f + H_0$$

It is preferable that, when a height from an upper surface of the bottom member to an emitting surface of the emitting unit is defined as $H_0$, a height $H_2$ from the lower end of the side member and a lower surface of the optical element should satisfy the following formula.

3

$$\frac{(n-1)\,P^2}{2\lambda} + f + H_0 < H_2 < \frac{n\,P^2}{2\lambda} + f + H_0$$

It is preferable that the height $H_2$ should satisfy the following formula, and a thickness $\delta 2$ of the lower-end-side bonding layer should be $0 < \delta 2 < f$.

$$\frac{n\,P^2}{2\lambda} + H_0 < H_2 < \frac{n\,P^2}{2\lambda} + f + H_0$$

It is preferable that the light source should be a VCSEL that has a resonator length t which is a converted distance in a medium between the emitting unit and the optical element, the height $H_2$ should satisfy the following formula, and the thickness $\delta 2$ of the lower-end-side bonding layer should be $0 < \delta 2 < t$.

$$\frac{n\,P^2}{2\lambda} + f - t + H_0 < H_2 < \frac{n\,P^2}{2\lambda} + f + H_0$$

It is preferable that the optical system device should further include a mask which is placed between the emitting unit and the optical element, and which diffuses or absorbs light reflected on a surface of the optical element.
It is preferable that an electrode of the emitting unit is placed at a position that does not reflect again, to the optical element, reflected light by a surface of the optical element.
Moreover, a manufacturing method for manufacturing an optical system device that includes an optical element that has lenses which have a focal distance f, allow light with a wavelength $\lambda$ to pass through, and are arranged periodically at a pitch P, an emitting unit that includes a light source which emits the light with the wavelength $\lambda$ to the plurality of lenses, a bottom member that fastens the emitting unit, and a side member that fastens the optical element and the bottom member with each other, the method including:

> an upper-end-side bonding adhesive placing process to place a bonding adhesive between the optical element and an upper end of the side member or a lower-end-side bonding adhesive placing process to place a bonding adhesive between the bottom member and a lower end of the side member;
> a distance adjusting process to adjust a distance between the emitting unit and the optical element by depressing the bonding adhesive in such a way that, when a distance between the emitting unit and a focal position of the optical element is defined as $L_1$, and n is a natural number greater than or equal to 1, the distance $L_1$ satisfies the following formula;

$$\frac{n\,P^2}{2\lambda} - f < L_1 < \frac{n\,P^2}{2\lambda} + f$$

> and a bonding adhesive curing process to cure the bonding adhesive with the distance $L_1$ being maintained.

In this case, it is preferable that this method should further include, prior to the distance adjusting process, a side member forming process to form the side member on the bottom member in such a way that, when a height from an upper surface of the bottom member to an emitting surface of the emitting unit is defined as $H_0$, a height $H_1$ from the upper surface of the bottom member to the upper end of the side member satisfies the following formula.

$$\frac{(n-1)\,P^2}{2\lambda} + f + H_0 < H_1 < \frac{n\,P^2}{2\lambda} + f + H_0$$

It is preferable that, in the side member forming process, the side member should be formed on the bottom member in such a way that the height $H_1$ satisfies the following formula;

EP 4 435 466 A1

$$\frac{n\,P^2}{2\lambda} + H_0 < H_1 < \frac{n\,P^2}{2\lambda} + f + H_0$$

and in the distance adjusting process, the bonding adhesive placed in the upper-end-side bonding adhesive placing process should be depressed in such a way that a thickness $\delta 1$ of the bonding adhesive becomes $0 < \delta 1 < f$.

It is preferable that the light source should be a VCSEL that has a resonator length t which is a converted distance in a medium between the emitting unit and the optical element;

in the side member forming process, the side member should be formed on the bottom member in such a way that the height $H_1$ satisfies the following formula;

$$\frac{n\,P^2}{2\lambda} + f - t + H_0 < H_1 < \frac{n\,P^2}{2\lambda} + f + H_0$$

and in the distance adjusting process, the bonding adhesive placed in the upper-end-side bonding adhesive placing process should be depressed in such a way that the thickness $\delta 1$ of the bonding adhesive becomes $0 < \delta 1 < t$.

It is preferable that this method should further include, prior to the distance adjusting process, a side member forming process to form the side member on the optical element in such a way that, when a height from an upper surface of the bottom member to an emitting surface of the emitting unit is defined as $H_0$, a height $H_2$ from the lower end of the side member and a lower surface of the optical element satisfies the following formula.

$$\frac{(n-1)\,P^2}{2\lambda} + f + H_0 < H_2 < \frac{n\,P^2}{2\lambda} + f + H_0$$

It is preferable that, in the side member forming process, the side member should be formed on the optical element in such a way that the height $H_2$ satisfies the following formula;

$$\frac{n\,P^2}{2\lambda} + H_0 < H_2 < \frac{n\,P^2}{2\lambda} + f + H_0$$

and in the distance adjusting process, the bonding adhesive placed in the lower-end-side bonding adhesive placing process should be depressed in such a way that a thickness $\delta 2$ of the bonding adhesive becomes $0 < \delta 2 < t$.

It is preferable that the light source should be a VCSEL that has a resonator length t which is a converted distance in a medium between the emitting unit and the optical element;

in the side member forming process, the side member should be formed on the optical element in such a way that the height $H_2$ satisfies the following formula;

$$\frac{n\,P^2}{2\lambda} + f - t + H_0 < H_2 < \frac{n\,P^2}{2\lambda} + f + H_0$$

and in the distance adjusting process, the bonding adhesive placed in the lower-end-side bonding adhesive placing process should be depressed in such a way that the thickness $\delta 2$ of the bonding adhesive becomes $0 < \delta 2 < t$.

It is preferable that in the distance adjusting process, the bonding adhesive should be depressed until a contrast of a dot pattern obtained by emitting light from the emitting unit to the optical element becomes greater than or equal to a predetermined value so as to adjust the distance between the emitting unit and the optical element.

ADVANTAGEOUS EFFECTS OF INVENTION

The optical system device according to the present disclosure is capable of emitting light with a high contrast.

Moreover, the optical system device manufacturing method according to the present disclosure can easily and surely manufacture the optical system device capable of emitting light with a high contrast.

BRIEF DESCRIPTION OF DRAWINGS

FIG. 1 is a schematic cross-sectional view illustrating an optical system device according to the present disclosure;

FIG. 2 is a schematic cross-sectional view illustrating an emitting unit and an optical element according to the present disclosure;

FIG. 3 is a diagram illustrating a light intensity at a far field for each light emitting mode;

FIG. 4 is a diagram illustrating a light intensity at a far field for each classified and synthesized light emitting mode;

FIG. 5 is a diagram illustrating, at a far field, a light intensity of light synthesized by changing the ratio of each light emitting mode;

FIG. 6 is a schematic plan view illustrating the optical element according to the present disclosure;

FIG. 7 is a schematic cross-sectional view illustrating a conventional optical system device;

FIG. 8 is a schematic plan view illustrating a positional relation between the emitting unit and the optical element according to the present disclosure;

FIG. 9 is a schematic cross-sectional view for describing reflection on an optical element surface according to the present disclosure;

FIG. 10 is a schematic cross-sectional view for describing a position of an electrode of the emitting unit according to the present disclosure;

FIG. 11 is a schematic cross-sectional view for describing a mask according to the present disclosure;

FIG. 12 is a diagram illustrating a method for manufacturing the optical system device according to the present disclosure;

FIG. 13 is a diagram illustrating the method for manufacturing the optical system device according to the present disclosure;

FIG. 14 is a diagram illustrating a bonding scheme of a side member and a bottom member according to the present disclosure;

FIG. 15 is a diagram illustrating a bonding scheme of the side member and the optical element according to the present disclosure;

FIG. 16 is a diagram illustrating, at a far field, a distributed light distribution of the emitting unit applied for a simulation;

FIG. 17 is a diagram illustrating the way of propagation of light from a lens applied for a first simulation;

FIG. 18 is a diagram illustrating optical characteristics based on the first simulation (a focal distance: 20 $\mu$m);

FIG. 19 is a diagram illustrating optical characteristics based on the first simulation (a focal distance: 40 $\mu$m);

FIG. 20 is a diagram illustrating optical characteristics based on the first simulation (a focal distance: 60 $\mu$m);

FIG. 21 is a diagram illustrating the appearance of light when collimated light is caused to enter a lens (a focal distance: 20 $\mu$m) applied for a second simulation;

FIG. 22 is a diagram illustrating the appearance of light when collimated light is caused to enter a lens (a focal distance: 40 $\mu$m) applied for the second simulation;

FIG. 23 is a diagram illustrating the appearance of light when collimated light is caused to enter a lens (a focal distance: 60 $\mu$m) applied for the second simulation;

FIG. 24 is a projection drawing due to a difference in $\delta$ according to the second simulation (a focal distance: 20 $\mu$m);

FIG. 25 is a projection drawing due to a difference in $\delta$ according to the second simulation (a focal distance: 40 $\mu$m);

FIG. 26 is a projection drawing due to a difference in $\delta$ according to the second simulation (a focal distance: 60 $\mu$m);

FIG. 27 illustrates a distributed light distribution due to the difference in $\delta$ according to the second simulation (the focal distance: 20 $\mu$m);

FIG. 28 illustrates a distributed light distribution due to the difference in $\delta$ according to the second simulation (the focal distance: 40 $\mu$m);

FIG. 29 illustrates a distributed light distribution due to the difference in $\delta$ according to the second simulation (the focal distance: 60 $\mu$m);

FIG. 30 is a diagram illustrating the maximum light intensity due to the difference in $\delta$ according to the second simulation (the focal distance: 20 $\mu$m);

FIG. 31 is a diagram illustrating the maximum light intensity due to the difference in $\delta$ according to the second simulation (the focal distance: 40 $\mu$m);

FIG. 32 is a diagram illustrating the maximum light intensity due to the difference in $\delta$ according to the second simulation (the focal distance: 60 $\mu$m);

FIG. 33 is a diagram for describing the lens according to the present disclosure;

FIG. 34 is a diagram illustrating the appearance of light when collimated light is caused to enter the lens applied for a third simulation;

FIG. 35 is a projection drawing due to a difference in $\delta$ according to the third simulation (a focal distance: 20 $\mu$m);

FIG. 36 illustrates a distributed light distribution (in an x-axis direction) due to the difference in $\delta$ according to the third simulation;

FIG. 37 illustrates a distributed light distribution (in a y-axis direction) due to the difference in $\delta$ according to the third simulation;

FIG. 38 is a diagram illustrating the maximum light intensity due to the difference in $\delta$ according to the third simulation; and

FIG. 39 is a diagram illustrating a contrast, a dot size, and a background due to a difference in $\delta$ in a first example.

DESCRIPTION OF EMBODIMENTS

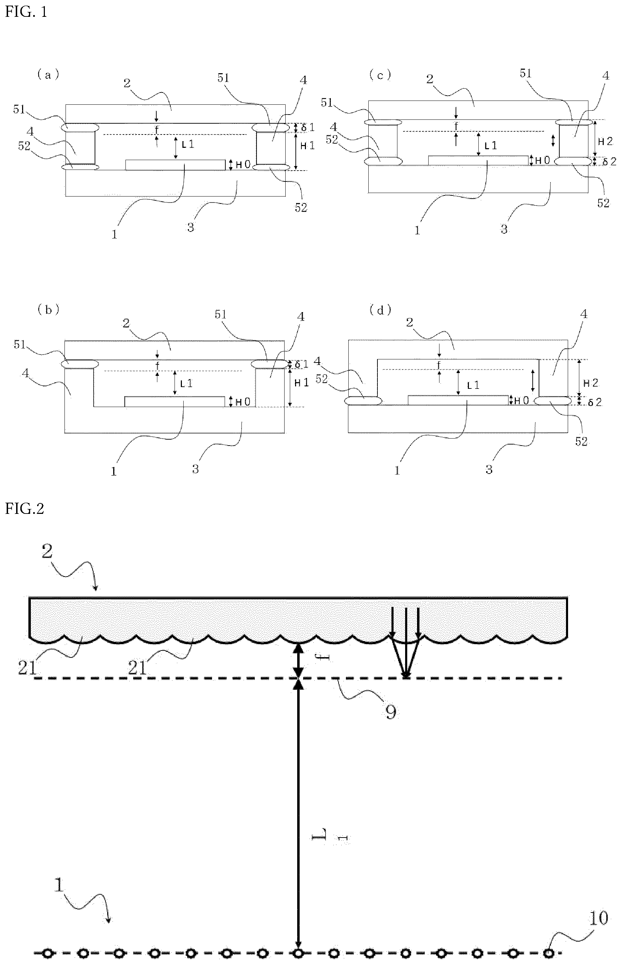

An optical system device according to the present disclosure will be described below. As illustrated in FIG. 1 and FIG. 2, the optical system device of the present disclosure mainly includes an emitting unit 1 that emits light with a wavelength $\lambda$, an optical element 2 that includes periodic lenses 21, a bottom member 3 that fastens the emitting unit 1, side members 4 for fastening the optical element 2 and the bottom member 3 with each other, and either one of or both of an upper-end-side bonding layer 51 that bonds the optical element 2 and the upper end of the side member 4 with each other or a lower-end-side bonding layer 52 that bonds the bottom member 3 and the lower end of the side member 4 with each other.

The emitting unit 1 is not limited to any particular component as far as it includes a light source that emits light with a wavelength $\lambda$ to the plurality of lenses 21. Moreover, the emitting unit 1 may include a singular light source or a plurality of light sources. Furthermore, light from a singular light source may be caused to pass through an aperture with multiple pores so as to accomplish a function as a plurality of light sources. When the emitting unit is formed by a plurality of light sources, it is preferable that such light sources should be formed on the same plane. Note that a surface of the emitting unit 1 where light goes out is defined as an emitting surface. A specific example of the emitting unit 1 is a Vertical Cavity Surface Emitting LASER (VCSEL) that is expected to achieve a high output with merely low electric power. As for the VCSEL, there are a single-emitter VCSEL that includes a singular light source 10 capable of emitting lights in the vertical direction to a light emitting surface, and a multi-emitter VCSEL that includes a plurality of such light sources 10.

[Light Emitting Mode]

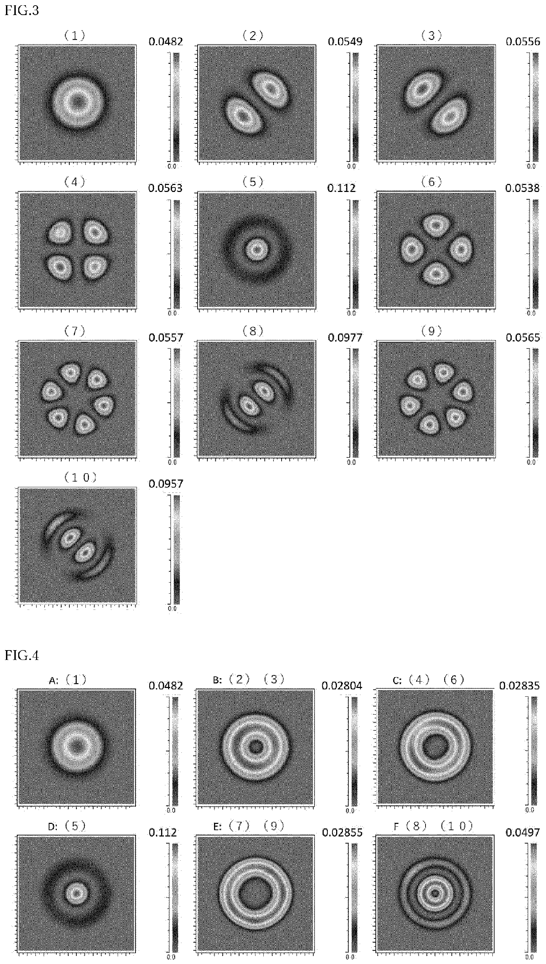

Moreover, when the light intensity of the VCSEL is to be increased, it is known that light from the VCSEL includes a plurality of light emitting modes, such as a single mode and a multi-mode. Specific example light emitting modes are illustrated in FIG. 3. In the light emitting modes illustrated in FIG. 3, (2) and (3), (4) and (6), (7) and (9), and (8) and (10) which are rotationally symmetric to each other, respectively, are always present at the same percentage, and when those similar modes are synthesized, respectively, as illustrated in FIG. 4, those can be consolidated into six kinds that are A, B, C, D, E, and F.

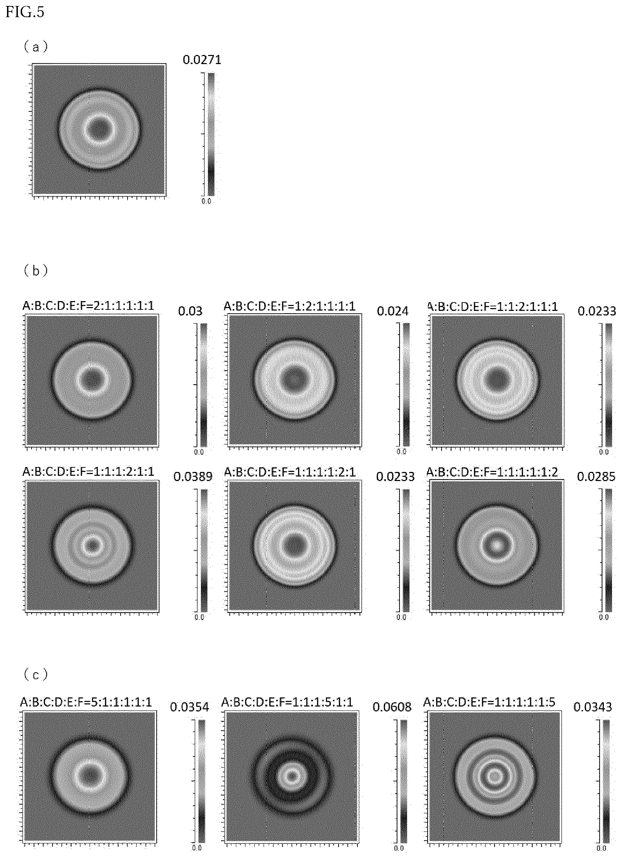

When these six kinds of modes are synthesized at the same ratio (A:B:C:D:E:F = 1:1:1:1:1:1), it becomes as illustrated in part (a) of FIG. 5, and the maximum intensity becomes 0.0271. Note that the figure illustrates the light intensity at a far field in each light distribution angle when the power of the light source is defined as 1.

Conversely, when only one kind among those six kinds is made twice as much as the other modes and those are synthesized, as illustrated in part (b) of FIG. 5, A:B:C:D:E:F = 2:1:1:1:1:1 has the maximum intensity that is 0.03, A:B:C:D:E:F = 1:1:1:2:1:1 has the maximum intensity that is 0.0389, and A:B:C:D:E:F = 1:1:1:1:1:2 has the maximum intensity that is 0.0285. That is, it becomes clear that, among the respective modes, when the ratio of the mode A or D that has the maximum intensity at the optical axis center, or the mode F that has the maximum intensity near the optical axis center increases, the maximum intensity of light having undergone synthesis becomes large in comparison with a case in which six kinds of the modes are set to be the same ratio. Part (c) of FIG. 5 illustrates results when, among six kinds of the modes, only the mode A, the mode D, and the mode F are further made five times as much as the other modes and those are synthesized. A:B:C:D:E:F = 5:1:1:1:1:1 has the maximum intensity that is 0.0354, A:B:C:D:E:F = 1:1:1:5:1:1 has the maximum intensity that is 0.0608, and A:B:C:D:E:F = 1:1:1:1:1:5 has the maximum intensity that is 0.0343. That is, light synthesized with the mode D being made five times (A:B:C:D:E:F = 1:1:1:5:1:1) has the maximum intensity of light remarkably increased after the synthesis.

In view of the above results, when the VCSEL that has the plurality of light emitting modes is applied, it is preferable that the light source of the VCSEL should have the greater ratio of the light emitting mode which has the maximum intensity at the optical axis center among the plurality of light emitting modes since the light intensity of a dot to be produced increases and the contrast can be also increased. Hence, it is preferable that the ratio of the mode having the maximum intensity at the optical axis center among the light emitting modes of the light source should be greater than or equal to 40 %, more preferably, greater than or equal to 45 %, and further preferably, greater than or equal to 60 %. Such a light emitting mode may be adjusted by conventionally known schemes like controlling the current injection path of the light emitting layer of the VCSEL.

The optical element 2 has the lenses 21 which allow light with a wavelength λ to pass through, and which are arranged periodically. The lens 21 has a focal point at a position apart from the lens 21 by a predetermined distance f (where f > 0). According to the optical element of the present disclosure, the greater the focal distance f is, such as greater than or equal to 10 μm, greater than or equal to 20 μm, greater than or equal to 40 μm, and greater than or equal to 60 μm, the more the contrast can be improved in comparison with conventional technologies.

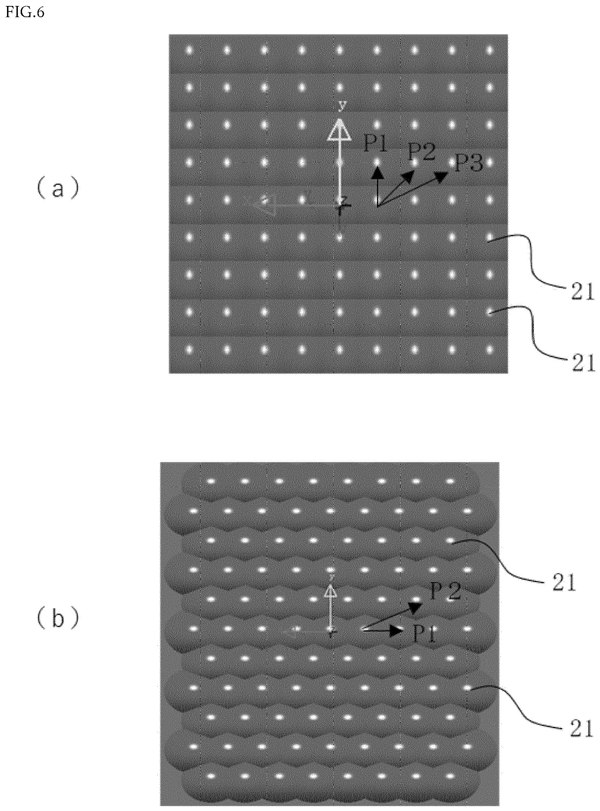

The shape of the lens 21 can be designed freely in accordance with the desired spreading pattern of dot to be emitted (will be referred to as a dot pattern below). When, for example, a circular dot pattern is desired, the shape of the lens 21 may be designed as a spherical lens. Moreover, when a non-circular dot pattern is desired, the shape of the lens 21 may be designed as appropriate so as to accomplish an aspheric lens. Specific example lens shapes are a convex lens, a concave lens, and a saddle-type lens that looks like as if a convex lens or a concave lens depending on a cross-section. Furthermore, as for the periodical arrangement, square or rectangular lenses 21 in a planar view are arranged tetragonally as illustrated in part (a) of FIG. 6, and hexagonal lenses 21 in a planar view are arranged hexagonally as illustrated in part (b) of FIG. 6. Still further, the lens 21 is not limited to any particular lens as far as it can function as a lens, and for example, a Fresnel lens, a DOE lens, and a meta-lens, etc., can be also applied. Yet still further, it is preferable that an antireflection film that prevents light from the emitting unit from being reflected should be formed on the lens 21.

The emitting unit 1 and the optical element 2 are placed in such a way that the optical-axis direction of the light source of the emitting unit 1 and the optical-axis direction of the lens 21 of the optical element 2 are consistent with each other.

[Distance between Emitting Unit and Optical Element]

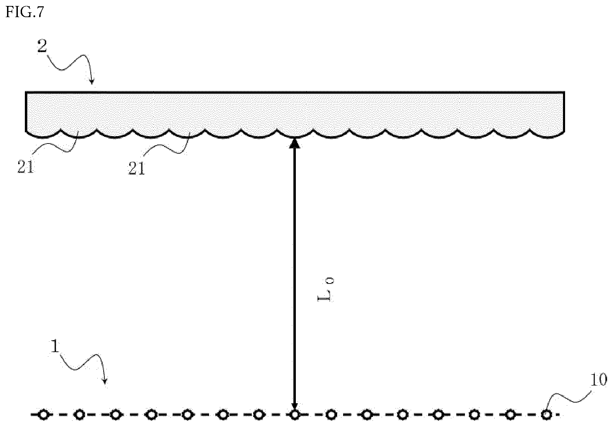

Conventionally, when n is defined as a natural number that is greater than or equal to 1, the wavelength of incident light from the emitting unit 1 is defined as λ, the pitch of the lenses 21 of the optical element 2 is defined as P, and the distance between the emitting unit 1 and the optical element 2 is defined as $L_0$, it has been thought that lights are largely intensified with each other when the distance $L_0$ satisfies the following formula (see FIG. 7).

[Formula A]

$$L_0 = \frac{n\,P^2}{2\,\lambda}$$

However, upon keen examinations and researches by the inventors of the present disclosure, it becomes clear that, when the focal distance of the optical element is defined as f, lights are further largely intensified with each other when the distance $L_0$ satisfies the following formula B.

[Formula B]

$$\frac{n\,P^2}{2\,\lambda} < L_0 < \frac{n\,P^2}{2\,\lambda} + 2\,f$$

In particular, it becomes clear that, when the following formula C is satisfied, lights are maximally intensified with each other.

[Formula C]

$$L_0 = \frac{n\,P^2}{2\,\lambda} + f$$

When the formula B and the formula C are represented not by the distance $L_0$ between the emitting unit 1 and the optical element 2, but by a distance $L_1$ between the emitting unit 1 and a focal position 9 of the optical element 2 as illustrated in FIG. 2 ($L_1 = L_0 - f$), those formulae become the following formulae D and E.

[Formula D]

$$\frac{n\,P^2}{2\lambda} - f < L_1 < \frac{n\,P^2}{2\lambda} + f$$

[Formula E]

$$L_1 = \frac{n\,P^2}{2\lambda}$$

Moreover, the lens 21 may have plural kinds of period. When, for example, the square lenses 21 in a planar view are arranged tetragonally as illustrated in part (a) of FIG. 6, in addition to a pitch $P_1$ between the adjacent lenses to each other, there are various kinds of pitches, such as a pitch $P_2$ (= $\sqrt{2}P_1$) and a pitch $P_3$ (= $\sqrt{5}P_1$) in the diagonal direction. Furthermore, when the hexagonal lenses 21 in a planar view are arranged hexagonally as illustrated in part (b) of FIG. 6, in addition to the pitch $P_1$ between the adjacent lenses to each other, there are pitches like the pitch $P_2$ (= $\sqrt{3}P_1$). Still further, like a case in which rectangular lenses in a planar view are arranged regularly, the lens 21 may have plural different periods. In this case, when the dimension of a k-th (where k is a natural number greater than or equal to 1) pitch from the smallest one among the pitches of the lens 21 is defined as $P_k$, $n_k$ is an arbitrary natural number that is greater than or equal to 1, and $0 \le a \le f$ and $0 \le b \le f$, it is appropriate that the distance $L_1$ between the emitting unit and the focal position 9 of the optical element should satisfy the following formula 1 for any of greater than or equal to one pitch $P_k$.

[Formula 1]

$$\frac{n_k P_k^2}{2\lambda} - a < L_1 < \frac{n_k P_k^2}{2\lambda} + b$$

In this case, it is preferable that the coefficients of the formula 1 should be as small as possible, such as a = f, a = 0.5f, a = 0.3f, and a = 0.1f. Moreover, it is also preferable that the coefficient b should as small as possible, such as b = f, b = 0.5f, b = 0.3f, and b = 0.1f. It is the most preferable that the distance $L_1$ should satisfy the following formula 2 where a = b = 0.

[Formula 2]

$$L_1 = \frac{n_k P_k^2}{2\lambda}$$

[Pitch in Emitting Unit]

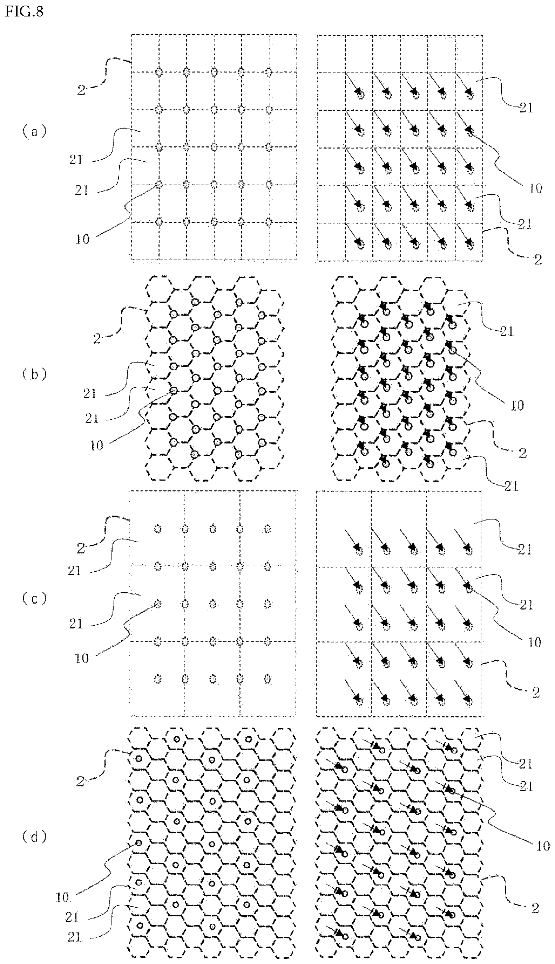

Moreover, when the emitting unit 1 includes the plurality of light sources 10, even if each light source 10 and the optical element 2 are relatively moved so as to be in parallel with each other, it is necessary to accomplish a placement in such a way that the number of the light sources 10 to each lens 21 of the optical element 2 becomes consistent in a planar view. More specifically, when m is defined as a natural number that is equal to or greater than 1, as for the emitting unit, it is preferable that the plurality of light sources should be arranged regularly by, relative to the periodic direction of any one of the lenses 21 of the optical element, m times or 1/m times of the period. In other words, it is preferable that the light sources 10 of the emitting unit 1 should be arranged regularly by a pitch $mP_k$ or $P_k/m$ relative to the direction in which the lenses 21 of the optical element 2 take the pitch $P_k$. In particular, a pitch $mP_1$ or $P_1/m$ is preferable. Parts (a) and (b) of FIG. 8 each illustrate a case in which the pitch of the light sources 10 is made consistent with the pitch $P_1$ of the lenses 21 of the optical element 2, where m = 1. Moreover, part (c) of FIG. 8 illustrates a case in which the pitch of the light sources 10 is set to be 1/2 of the pitch $P_1$ of the lenses 21 of the optical element 2, i.e., $P_1/2$, where m = 2. Furthermore, part (d) of FIG. 8 illustrates a case in which the pitch of the light sources 10 is set to be twice as much as the pitch $P_1$ of the lenses 21 of the optical element 2, i.e., $2P_1$, where m = 2.

Note that, it is preferable that, for any of greater than or equal to two pitches $P_k$, the distance $L_1$ between the emitting unit 1 and the focal position 9 of the optical element 2 should be adjusted so as to satisfy the formula 1. In that case, since the effect for diffraction becomes the maximum when the pitch is the smallest, it is preferable that, for the smallest pitch $P_1$, the formula 1 should be satisfied, and it is more preferable that, also for the second smallest pitch $P_2$, the formula 1 should be satisfied.

Note that when the emitting unit 1 has the light sources 10 arranged hexagonally, it is preferable that the planar shape of the lens 21 of the optical element should be formed in a rectangular shape, a ratio between the short side of such a rectangular shape and the long side thereof should be set to be $P_1:P_2 = 1: \sqrt{3}$ , and the pitch of the light source 10 should be set to be $mP_1$ or $P_1/m$ since the number of the optical elements 10 relative to each lens 21 becomes uniform. Moreover, in such a case, in order to satisfy the formula 1 for the smallest pitch $P_1$ (the length of the short side of the rectangular shape) and for the second smallest pitch $P_2$ (the length of the long side of the rectangular shape), with $P_2 = \sqrt{3}P_1$, i.e., $(P_2)^2 = 3(P_1)^2$ being taken into consideration, it is preferable that the distance $L_1$ between the emitting unit 1 and the optical element 2 should satisfy the following formula 3, and more preferably, should satisfy the following formula 4.

[Formula 3]

$$\frac{3\,n\,P_1^{\,2}}{2\lambda} - f < L_1 < \frac{3\,n\,P_1^{\,2}}{2\lambda} + f$$

[Formula 4]

$$L_1 = \frac{3\,n\,P_1^{\,2}}{2\lambda}$$

Moreover, upon keen examinations and researches by the inventors of the present disclosure, it becomes clear that, when a VCSEL that has a resonator length which is t is adopted as the light source, the contrast hardly changes within the range where $0 \leq a \leq t$ and $0 \leq b \leq t$ in the formula 1. Hence, it is preferable that the distance $L_1$ should satisfy the following formula 5.

[formula 5]

$$\frac{n_k\,P_k^{\,2}}{2\lambda} - t < L_1 < \frac{n_k\,P_k^{\,2}}{2\lambda} + t$$

Note that the term "resonator length t" in this specification means a distance that is a converted distance in a medium between the emitting unit and the optical element.

Note that, when the pitch $P_k$ becomes too smaller than the wavelength $\lambda$ of the light from the light source 10, it becomes difficult to produce diffraction. Hence, it is preferable that the $P_k$, in particular, the pitch $P_1$ should be sufficiently greater than the wavelength $\lambda$ of the light from the light source 10 as far as the sufficient lenses 21 to produce the diffraction within a light distribution angle of the light source 10 are provided, and for example, equal to or greater than five times, more preferably, equal to or greater than 10 times are suitable.

The bottom member 3 is to fasten the emitting unit 1. The surface of the bottom member 3 that fastens the emitting unit 1 may be a plane, or may be provided with a concave groove where the emitting unit 1 is embedded. Regarding the fastening scheme, a general scheme such as fastening the emitting unit 1 to the bottom member 3 by bonding adhesive, is applicable.

The side member 4 is to fasten the optical element 2 to the bottom member 3 with a clearance therebetween that has a predetermined distance. The optical element 2 and the upper end of the side member 4 are bonded with each other via an upper-end-side bonding layer 51. Moreover, the bottom member 3 and the lower end of the side member 4 are bonded with each other via a lower-end-side bonding layer 52. Note that, as illustrated in part (b) of FIG. 1, as far as the upper-end-side bonding layer 51 is provided, the side members 4 may be formed integrally with the bottom member 3 without the lower-end-side bonding layer 52. Furthermore, as illustrated in part (d) of FIG. 1, as far as the lower-end-side bonding layer 52 is provided, the side members 4 may be formed integrally with the optical element without the upper-end-side bonding layer 51.

Note that the integral side member 4 may be formed in a cylindrical shape that surrounds the periphery of the emitting unit 1, and may be formed so as to seal the emitting unit 1 therein when the optical element 2, the bottom member 3 and the side member 4 are bonded together by bonding adhesive.

As for the materials of the bottom member 3 and of the side member 4, conventionally well-known materials are applicable, but for example, the material that has a little deformation due to the surrounding environment is suitable. Moreover, the material that does not deform and deteriorate due to a resin which forms the bonding layer is suitable.

The upper-end-side bonding layer 51 is formed between the upper end of the side member 4 and the optical element so as to place the emitting unit 1 between the optical element 2 and the bottom member 3, and is to bond the optical element 2 and the side member 4 with each other. Moreover, the lower-end-side bonding layer 52 is formed between the lower end of the side member 4 and the bottom member 3, and is to bond the bottom member 3 and the side member 4 with each other. Furthermore, the upper-end-side bonding layer 51 and the lower-end-side bonding layer 52 respectively have functions to adjust the distance $L_1$ between the emitting surface of the emitting unit 1 and the focal position of the lens of the optical element 2 in a state in which those layers are bonding adhesives with a flowability before cured.

The upper-end-side bonding layer 51 or the lower-end-side bonding layer 52 may be formed on the entire surface of the end portion of the side member 4, or may be formed partially. Moreover, the material of the upper-end-side bonding layer 51 or of the lower-end-side bonding layer 52 is not limited to any particular material as far as it can bond the side member 4 and the optical element 2 or the bottom member 3 with each other, but for example, bonding adhesives, such as a silicon-based resin, an epoxy-based resin, and an acrylic resin, are applicable. As for the kind of the bonding adhesive, for example, a photo-curable bonding adhesive, a UV-added bonding adhesive, and a thermosetting bonding adhesive are applicable.

When the side member 4 and the bottom member 3 are bonded with each other by the lower-end-side bonding layer 52 as illustrated in part (a) of FIG. 1, or integrally formed as illustrated in part (b) of FIG. 1, a height from the upper surface of the bottom member 3 to the emitting surface of the emitting unit 1 is defined as $H_0$. In this case, it is preferable that a height $H_1$ from the upper surface of the bottom member 3 to the upper end of the side member 4 should satisfy at least the following formula 6.

[Formula 6]

$$\frac{(n-1)\,P^2}{2\lambda} + f + H_0 < H_1 < \frac{n\,P^2}{2\lambda} + f + H_0$$

It is more preferable that a thickness $\delta 1$ of the upper-end-side bonding layer 51 should be controlled so as to become $0 < \delta 1 < f$ after being formed in such a way that the height $H_1$ satisfies the following formula 7.

[Formula 7]

$$\frac{n\,P^2}{2\lambda} + H_0 < H_1 < \frac{n\,P^2}{2\lambda} + f + H_0$$

Hence, the distance $L_1$ surely satisfies the following formula 8.

[Formula 8]

$$\frac{n\,P^{2}}{2\,\lambda} - f < L_{1} < \frac{n\,P^{2}}{2\,\lambda} + f$$

Moreover, when the light source is a VCSEL with a resonator length that is t, it is preferable that the thickness 61 of the upper-end-side bonding layer 51 should be controlled so as to become $0 < \delta1 < t$ after being formed in such a way that the height $H_1$ satisfies the following formula 9.

[Formula 9]

$$\frac{n\,P^{2}}{2\,\lambda} + f - t + H_{0} < H_{1} < \frac{n\,P^{2}}{2\,\lambda} + f + H_{0}$$

Hence, the distance $L_1$ surely satisfies the following formula 10.

[Formula 10]

$$\frac{n\,P^{2}}{2\,\lambda} - t < L_{1} < \frac{n\,P^{2}}{2\,\lambda} + t$$

Furthermore, it is defined that, when the side member 4 and the optical element are bonded with each other by the upper-end-side bonding layer 51 as illustrated in part (C) of FIG. 1, or are integrally formed as illustrated in part (d) of FIG. 1, a height from the upper surface of the bottom member 3 to the emitting surface of the emitting unit 1 is $H_0$. In this case, it is preferable that a height $H_2$ from the lower end of the side member 4 to the lower surface of the optical element 2 should satisfy at least the following formula 11.

[Formula 11]

$$\frac{(n-1)\,P^{2}}{2\,\lambda} + f + H_{0} < H_{2} < \frac{n\,P^{2}}{2\,\lambda} + f + H_{0}$$

It is more preferable that a thickness $\delta2$ of the upper-end-side bonding layer 51 should be controlled so as to become $0 < \delta2 < f$ after being formed in such a way that the height $H_2$ satisfies the following formula 12.

[Formula 12]

$$\frac{n\,P^{2}}{2\,\lambda} + H_{0} < H_{2} < \frac{n\,P^{2}}{2\,\lambda} + f + H_{0}$$

Hence, the distance $L_1$ surely satisfies the following formula 8.

[Formula 8]

$$\frac{n\,P^{2}}{2\,\lambda} - f < L_{1} < \frac{n\,P^{2}}{2\,\lambda} + f$$

Moreover, when the light source is a VCSEL with a resonator length that is t, it is preferable that the thickness $\delta 2$ of the lower-end-side bonding layer 52 should be controlled so as to become $0 < \delta 2 < t$ after being formed in such a way that the height $H_2$ satisfies the following formula 13.

[Formula 13]

$$\frac{n P^2}{2\lambda} + f - t + H_0 < H_2 < \frac{n P^2}{2\lambda} + f + H_0$$

Hence, the distance $L_1$ surely satisfies the following formula 10.

[Formula 10]

$$\frac{n P^2}{2\lambda} - t < L_1 < \frac{n P^2}{2\lambda} + t$$

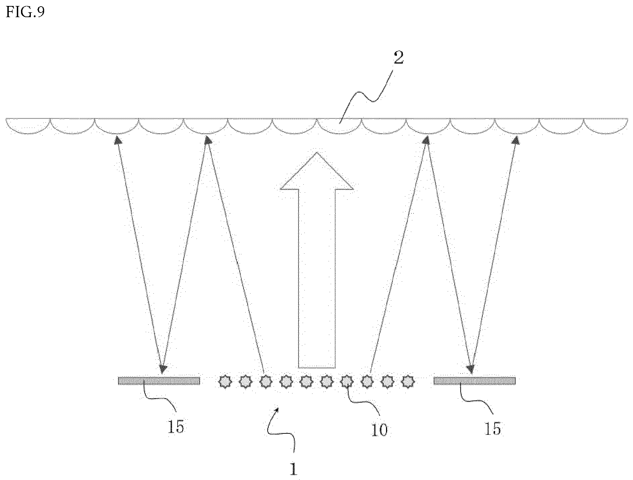

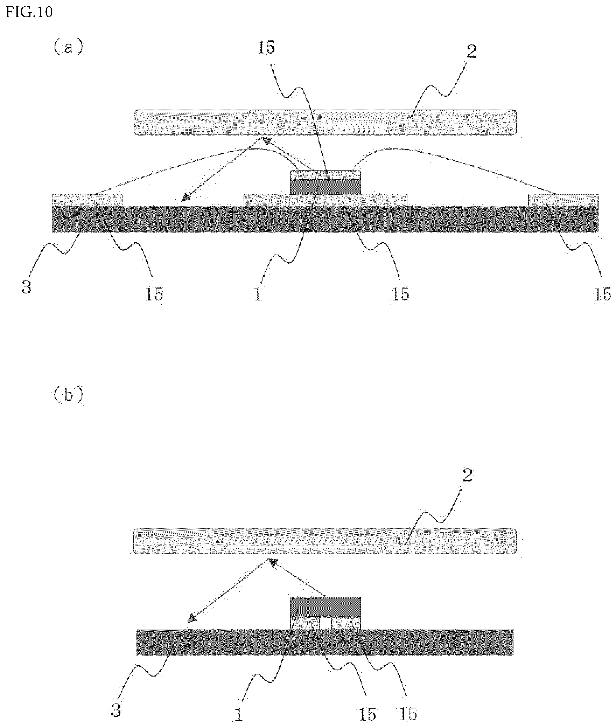

Moreover, upon keen examinations and researches by the inventors of the present disclosure, it becomes clear that, as illustrated in FIG. 9, when light emitted from the emitting unit 1 to the optical element 2 and reflected on the surface of the optical element 2 is emitted again to the optical element 2 by, for example, an electrode 15 of the emitting unit 1, this becomes a cause of noises and ghosts, and thus a contrast decreases. Hence, it is preferable that no component that reflects light again to the optical element 2 (e.g., the electrode 15) should be placed at a position where the reflected light by the surface of the optical element 2 passes. Moreover, even if such a component is placed at the position where the reflected light by the surface of the optical element 2 passes, it is still preferable that such a component should be placed at a position where the light is not reflected to the optical element 2 again. For such a purpose, for example, as illustrated in part (a) of FIG. 10, the electrode 15 of the emitting unit 1 may be largely displaced from the position where the reflected light by the surface of the optical element 2 passes. Moreover, as illustrated in part (b) of FIG. 10, a flip-chip type emitting unit 1 may be adopted, and the electrode 15 may be placed at the back-surface side of the light source 10.

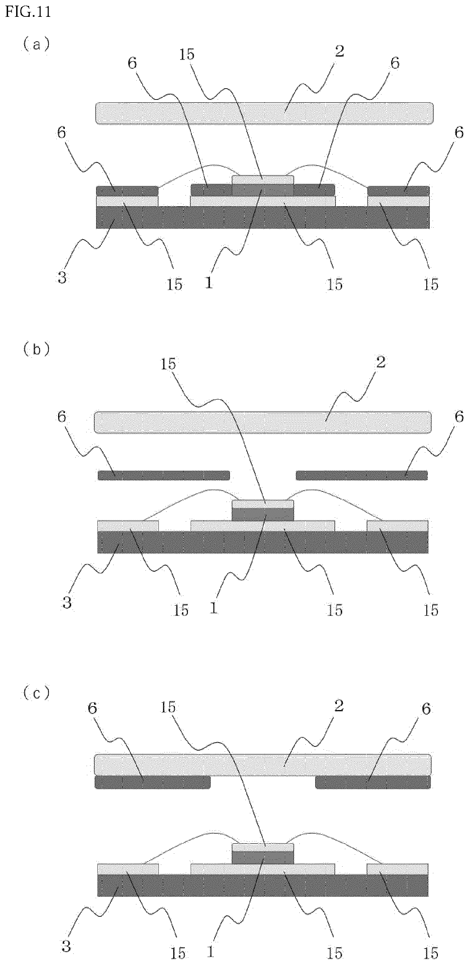

Furthermore, it may be necessary to place a component that reflects light again to the optical element 2 at the position where the light reflected on the surface of the optical element 2 passes. In this case, as illustrated in FIG. 11, a mask 6 that diffuses or absorbs light reflected on the surface of the optical element 2 may be placed between the emitting unit 1 and the optical element 2. The position of the mask 6 is not limited to any particular position as far as it is between the emitting unit 1 and the optical element 2 and is a position that does not block the emitted light from the emitting unit 1 to the optical element 2. For example, as illustrated in part (a) of FIG. 11, it may be placed on the electrode 15, as illustrated in part (b) of FIG. 11, may be placed in a space between the electrode 15 and the optical element 2, and as illustrated in part (c) of FIG. 11, may be placed on the optical element 2. An example material that absorbs light is a black resist. Moreover, when light is diffused, for example, a material that has a surface which is not a mirror surface may be applied.

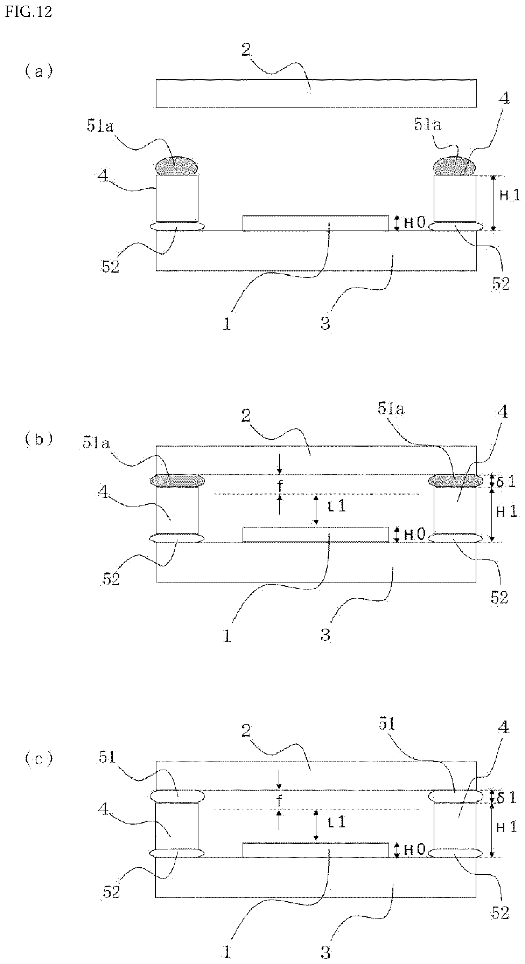

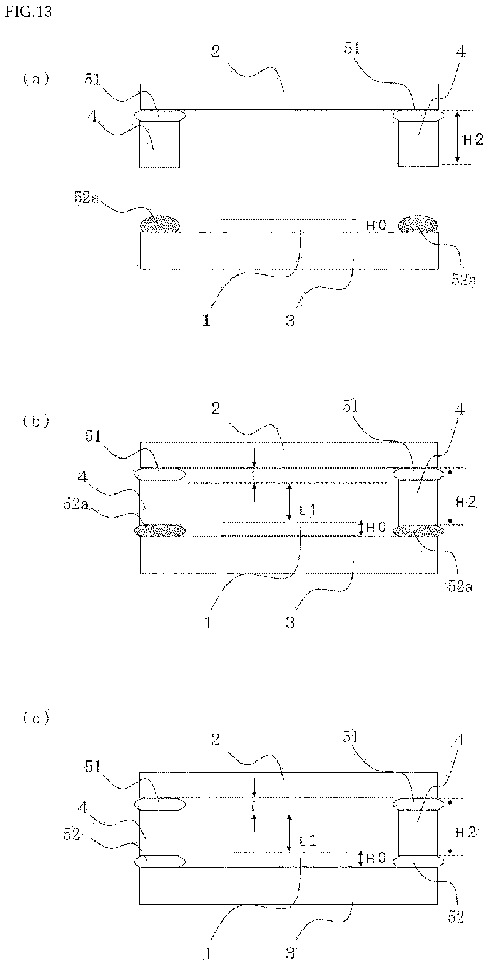

Next, a method for manufacturing the optical system device according to the present disclosure will be described with reference to FIG. 12 and FIG. 13. This manufacturing method is to manufacture the optical system device that includes the optical element 2 that has the lenses 21 which have a focal distance f, allow light with a wavelength $\lambda$ to pass through, and are arranged periodically at a pitch P, the emitting unit 1 that includes the light source which emits the light with the wavelength $\lambda$ to the plurality of lenses 21, the bottom member 3 that fastens the emitting unit 1, and the side member 4 that fastens the optical element 2 and the bottom member 3 with each other. This method mainly includes an upper-end-side bonding adhesive placing process to place a bonding adhesive between the optical element 2 and the upper end of the side member 4 or a lower-end-side bonding adhesive placing process to place a bonding adhesive between the bottom member 3 and the lower end of the side member 4, a distance adjusting process to adjust the distance between the emitting unit 1 and the optical element 2, and a bonding adhesive curing process to cure the bonding adhesive.

First, the manufacturing method of the optical element 2 applied to the optical system device according to the present disclosure will be described. The lenses 21 of the optical element 2 may be manufactured by any scheme, but for example, can be manufactured by imprinting. More specifically, the material of the lenses 21 may be applied on a substrate 25 at a predetermined film thickness by conventionally well-known scheme like spin coating (an applying process). The material is not limited to any particular one as far as it can form the lens 21 that allows light with the

wavelength $\lambda$ to pass through, and for example, polydimethylsiloxane (PDMS) is applicable.

Next, a mold that has an inverted pattern of a pattern having the lenses 21 arranged periodically is prepared, and such a mold is depressed against the material applied on the substrate 25, thereby transferring the pattern thereto (an imprinting process).

This enables manufacturing of the optical element 2 that has a little variability in the focal position 9 of the lens 21, and thus an error in the distance $L_1$ can be reduced.

In the upper-end-side bonding adhesive placing process, as illustrated in part (a) of FIG. 12, a bonding adhesive 51a is placed between the optical element 2 and the upper end of the side member 4. Moreover, in the lower-end-side bonding adhesive placing process, as illustrated in part (a) of FIG. 13, a bonding adhesive 52a is placed between the bottom member 3 and the lower end of the side member 4. The bonding adhesive may be placed on the entire surface of the end portion (the upper end or the lower end) of the side member 4, or may be placed partly thereon. Furthermore, the bonding adhesive may be placed at a portion of the optical element 2 or of the bottom member 3 to be bonded with the side member 4. Still further, the bonding adhesive is not limited to any particular one as far as it can bond the side member 4 with optical element 2 or the bottom member 3, but for example, a bonding adhesive, such as a silicon-based resin, an epoxy-based resin or an acrylic resin, may be applied. As for the kind of the bonding adhesive, for example, a photo-curable bonding adhesive, a UV-added bonding adhesive, and a thermosetting bonding adhesive are applicable.

The distance adjusting process is, as illustrated in part (b) of FIG. 12 or part (b) of FIG. 13, to adjust the distance between the emitting unit and the optical element by depressing the bonding adhesive in such a way that a distance $L_1$ satisfies the following formula 11, where $L_1$ is the distance between the emitting unit and the focal position of the optical element, and n is a natural number greater than or equal to 1.

[Formula 11]

$$\frac{n\,P^2}{2\lambda} - f < L_1 < \frac{n\,P^2}{2\lambda} + f$$

As for the adjustment of the distance, any scheme that enables an adjustment so as to satisfy the formula 11 is applicable. For example, using a conventionally known sensor, the distance between the emitting unit and the optical element may be measured, and the emitting unit and the optical element may be displaced until the distance $L_1$ satisfies the formula 11. As for another scheme, the bonding adhesive may be depressed until the contrast of a dot pattern obtained by emitted light from the emitting unit to the optical element becomes greater than or equal to a predetermined value, thereby adjusting the distance between the emitting unit and the optical element.

The bonding adhesive curing process is, as illustrated in part (c) of FIG. 12 or part (c) of FIG. 13, to cure the bonding adhesive with the distance $L_1$ adjusted in the distance adjusting process being maintained. Thus, the upper-end-side bonding layer 51 that bonds the optical element and the upper end of the side member 4 with each other, or the lower-end-side bonding layer 52 that bonds the bottom member 3 and the lower end of the side member 4 with each other is formed. When the bonding adhesive is a photo-curable bonding adhesive, light is emitted to the bonding adhesive for curing. Moreover, when the bonding adhesive is a thermosetting adhesive, heat is applied to the bonding adhesive for curing. Furthermore, when the bonding adhesive is a UV-added bonding adhesive, after light is emitted to the bonding adhesive, the distance $L_1$ between the emitting unit and the focal position of the optical element is adjusted through the distance adjusting process, and then the distance $L_1$ may be maintained until the bonding adhesive sufficiently cures.

Note that in the distance adjusting process, when the distance is adjusted only by the thickness of the bonding adhesive placed on the upper end of the side member 4 (the thickness of the upper-end-side bonding layer 51), when it is defined that a height from the upper surface of the bottom member 3 to the emitting surface of the emitting unit is $H_0$, it is preferable to carry out, prior to the distance adjusting process, a side member forming process to form the side member 4 on the bottom member 3 in such a way that a height $H_1$ from the upper surface of the bottom member 3 to the upper end of the side member 4 satisfies the following formula 12.

[Formula 12]

$$\frac{(n-1)\,P^2}{2\lambda} + f + H_0 < H_1 < \frac{n\,P^2}{2\lambda} + f + H_0$$

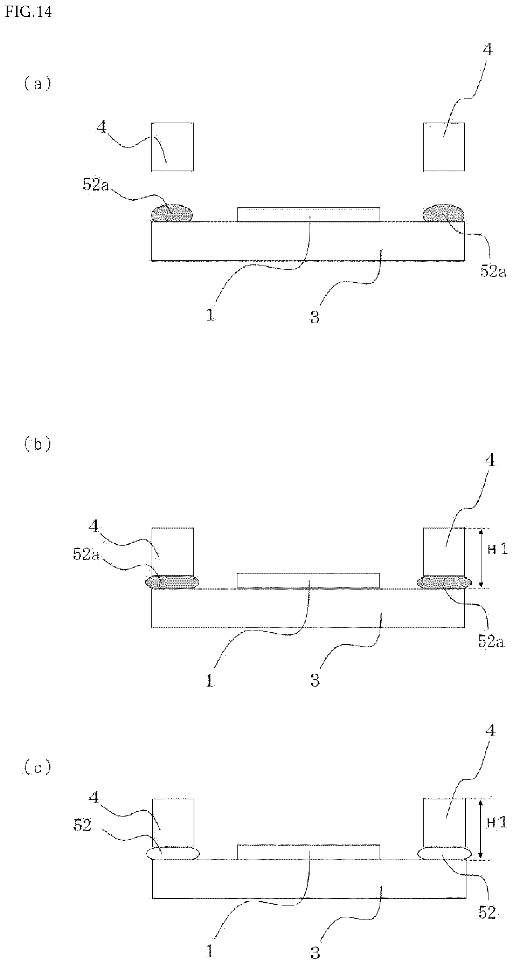

In this case, as illustrated in part (a) of FIG. 14, a bonding adhesive 52a is placed between the bottom member 3 and the lower end of side member 4, as illustrated in part (b) of FIG. 14, the side member 4 is depressed against the bonding adhesive 52a so as to adjust the height $H_1$, and then, as illustrated in part (c) of FIG. 14, the bonding adhesive 52a is cured so as to finish the side member 4. Moreover, the side member 4 may be integrally formed together with the bottom member 3 so as to accomplish the predetermined height $H_1$.

Furthermore, it is more preferable to form, in the side member forming process, the side member 4 on the bottom member 3 in such a way that the height $H_1$ satisfies the following formula 13, and to depress, in the distance adjusting process, the bonding adhesive in such a way that a thickness $\delta1$ of the bonding adhesive placed in the upper-end-side bonding adhesive placing process satisfies $0 < \delta1 < f$.

[Formula 13]

$$\frac{n\,P^2}{2\lambda} + H_0 < H_1 < \frac{n\,P^2}{2\lambda} + f + H_0$$

This enables manufacturing of the optical system device that has the distance $L_1$ which is between the emitting unit and the focal position of the optical element and which surely satisfies the formula 11.

Moreover, as described above, upon keen examinations and researches by the inventors of the present disclosure, it becomes clear that, when a VCSEL that has a resonator length which is a converted distance in a medium between the emitting unit and the optical element and which is t is adopted as the light source, the contrast hardly changes within the range of the formula 10. Hence, in this case, it is preferable to form, in the side member forming process, the side member 4 on the bottom member 3 in such a way that the height $H_1$ satisfies the following formula 14, and to depress, in the distance adjusting process, the bonding adhesive in such a way that the thickness $\delta1$ of the bonding adhesive 51a placed in the upper-end-side bonding adhesive placing process satisfies $0 < \delta1 < t$.

[Formula 14]

$$\frac{n\,P^2}{2\lambda} + f - t + H_0 < H_1 < \frac{n\,P^2}{2\lambda} + f + H_0$$

Furthermore, in the distance adjusting process, when the distance is adjusted only by the thickness of the bonding adhesive placed on the lower end of the side member 4 (the thickness of the lower-end-side bonding layer 52), when it is defined that a height from the upper surface of the bottom member 3 to the emitting surface of the emitting unit is $H_0$, it is preferable to carry out, prior to the distance adjusting process, a side member forming process to form the side member 4 on the optical element in such a way that a height $H_2$ from the lower end of the side member 4 to the lower surface of the optical element satisfies the following formula 15.

[Formula 15]

$$\frac{(n-1)\,P^2}{2\lambda} + f + H_0 < H_2 < \frac{n\,P^2}{2\lambda} + f + H_0$$

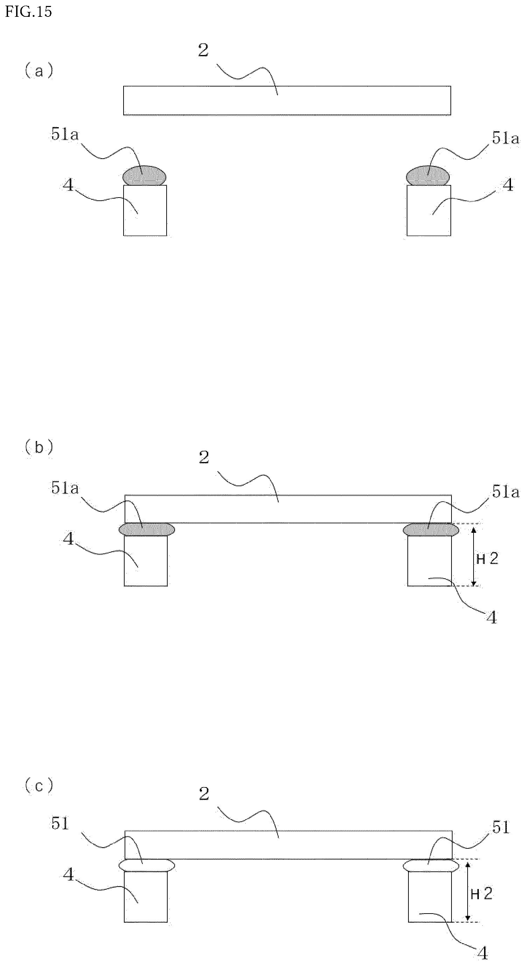

In this case, as illustrated in part (a) of FIG. 15, a bonding adhesive 51a is placed between the optical element 2 and the upper end of side member 4, as illustrated in part (b) of FIG. 15, the side member 4 is depressed against the bonding adhesive 51a so as to adjust the height $H_2$, and then, as illustrated in part (c) of FIG. 15, the bonding adhesive 51a is cured so as to finish the side member 4. Moreover, the side member 4 may be integrally formed together with the optical element 2 so as to accomplish the predetermined height H2.

It is more preferable to form, in the side member forming process, the side member 4 on the optical element in such a way that the height $H_2$ satisfies the following formula 16, and to depress, in the distance adjusting process, the bonding adhesive in such a way that a thickness $\delta2$ of the bonding adhesive placed in the lower-end-side bonding adhesive placing process satisfies $0 < \delta2 < f$.

[Formula 16]

$$\frac{n\,P^2}{2\lambda} + H_0 < H_2 < \frac{n\,P^2}{2\lambda} + f + H_0$$

This enables manufacturing of the optical system device that has the distance $L_1$ which is between the emitting unit and the focal position of the optical element and which surely satisfies the formula 11.

Moreover, as described above, upon keen examinations and researches by the inventors of the present disclosure, it becomes clear that, when a VCSEL that has a resonator length which is a converted distance in a medium between the emitting unit and the optical element and which is t is adopted as the light source, the contrast hardly changes within the range of the formula 10. Hence, in this case, it is preferable to form, in the side member forming process, the side member 4 on the optical element in such a way that the height $H_2$ satisfies the following formula 17, and to depress, in the distance adjusting process, the bonding adhesive in such a way that the thickness $\delta2$ of the bonding adhesive placed in the lower-end-side bonding adhesive placing process satisfies $0 < \delta2 < t$.

[Formula 17]

$$\frac{n\,P^2}{2\lambda} + f - t + H_0 < H_2 < \frac{n\,P^2}{2\lambda} + f + H_0$$

[Simulations]

Next, with the distance $L_1$ between the emitting unit 1 and the focal position 9 of the optical element 2 being set as the following formula 18, simulations were made for light intensity distributions at a far field when $\delta$ was changed variously.

[Formula 18]

$$L_1 = \frac{n_k\,P_k^2}{2\lambda} + \delta$$

[First Simulation]

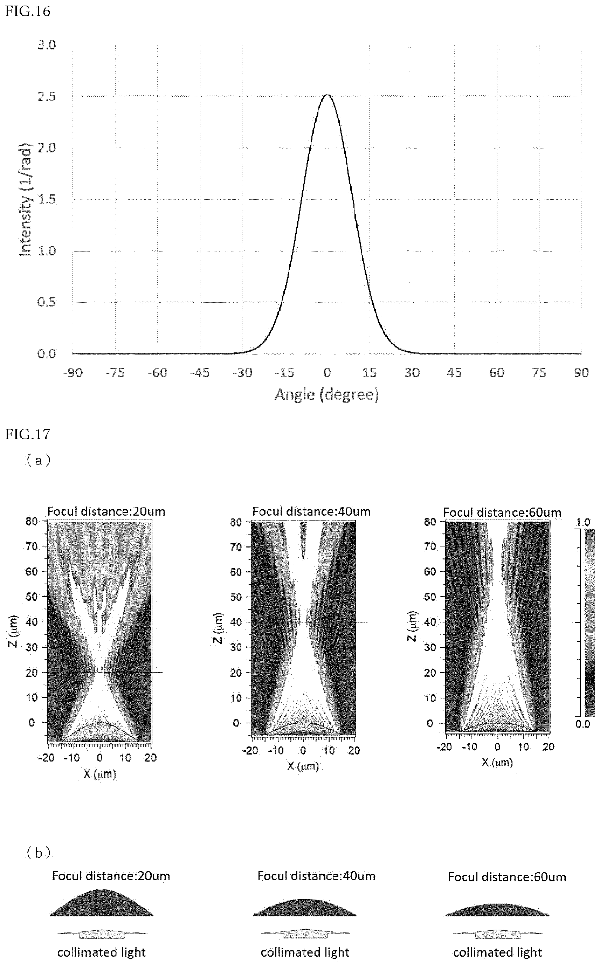

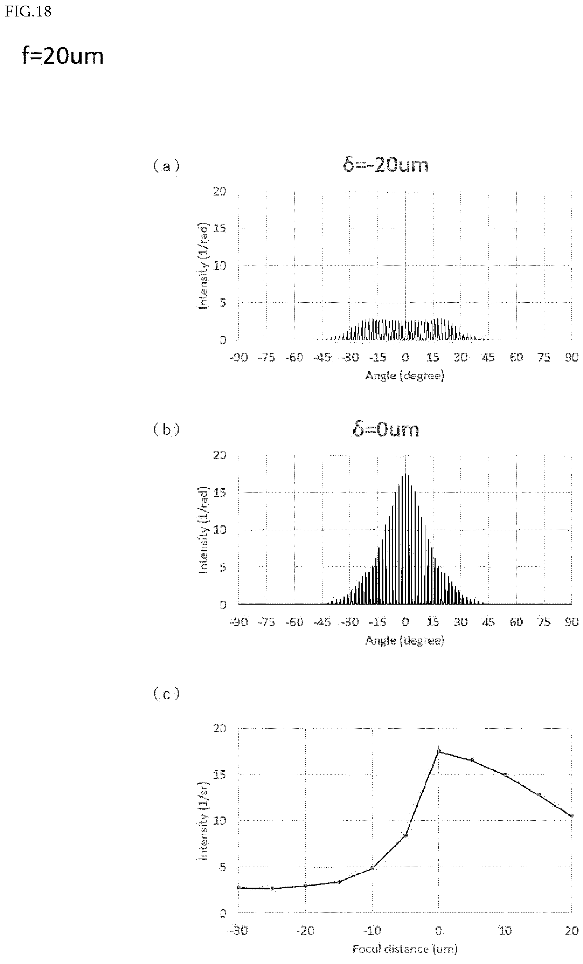

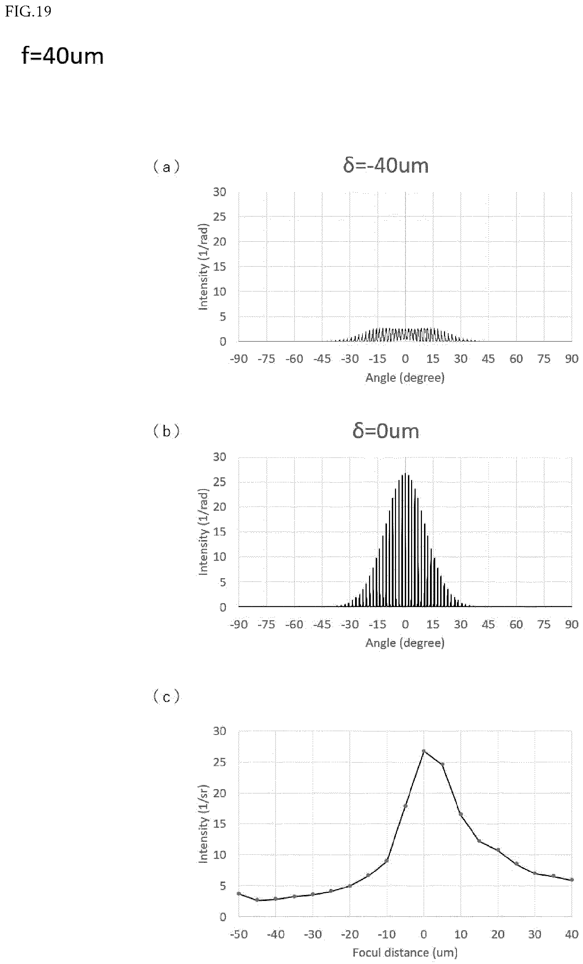

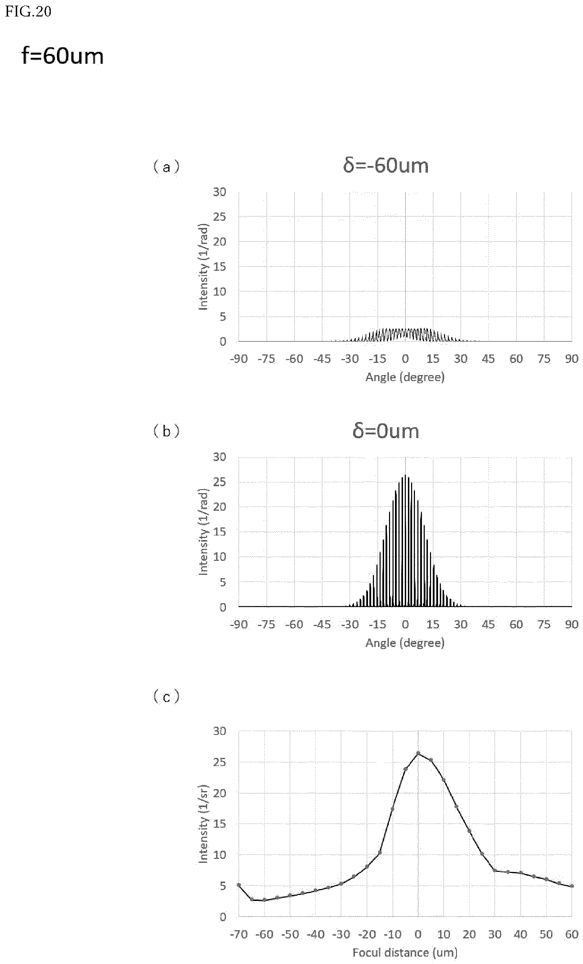

The emitting unit 1 was a singular light source that emits light which has a wavelength of 940 nm (X = 0.94) and which is Gaussian distributed light as illustrated in FIG. 16. The applied optical element 2 had the plurality of lenses 21 arranged periodically in such a way that the pitch $P_1$ becomes 30 $\mu$m ($P_1$ = 30) as illustrated in FIG. 2. Moreover, three kinds of the lenses 21 were applied which had a diameter that is 30 $\mu$m, a refractive index that is 1.5, and focal distances f that are (a) 20 $\mu$m, (b) 40 $\mu$m, and (c) 60 $\mu$m. Part (a) of FIG. 17 is a diagram illustrating the way of the propagation of light when collimated light was emitted to each lens as illustrated in part (b) of FIG. 17. Note that $n_k$ in the formula 18 was set to be 2. FIGS. 18 to 20 illustrate simulation results using an optical simulation software BeamPROP (available from Synopsys Inc.). Such a simulation was a 2D calculation result that has the depthwise direction in FIG. 2 not taken into consideration in order to simplify the calculation.

Respective parts (a) of FIG. 18 to FIG. 20 are each a graph showing a light intensity distribution when the distance $L_0$ between the emitting unit 1 and the optical element 2 satisfies the above-described formula A like conventional technologies.

Moreover, respective parts (b) of FIG. 18 to FIG. 20 are each a graph showing a light intensity distribution when the distance $L_1$ between the emitting unit 1 and the focal position 9 of the optical element 2 satisfies the above-described formula 2.

Furthermore, respective parts (c) of FIG. 18 to FIG. 20 are each a graph showing a difference of the maximum light intensity in each light intensity distribution relative to the value of $\delta$.

Note that the horizontal axis in respective parts (a) and (b) of FIG. 18 to FIG. 20 represents a light distribution angle, and the vertical axis therein represents a light intensity at a far field when the power of the light source is defined as 1. Moreover, the horizontal axis in respective parts (c) of FIG. 18 to FIG. 20 represents $\delta$, and the vertical axis therein represents a light intensity at a far field when the power of the light source is defined as 1.

In view of the simulation results, it becomes clear that the optical element 2 that satisfies the formula 1 has a clear peak, and has a large light intensity at the peak in comparison with a case in which the formula A is satisfied. Moreover, it also becomes clear that, when the formula 2 is satisfied, the light intensity at the peak becomes the maximum.

[Second Simulation]

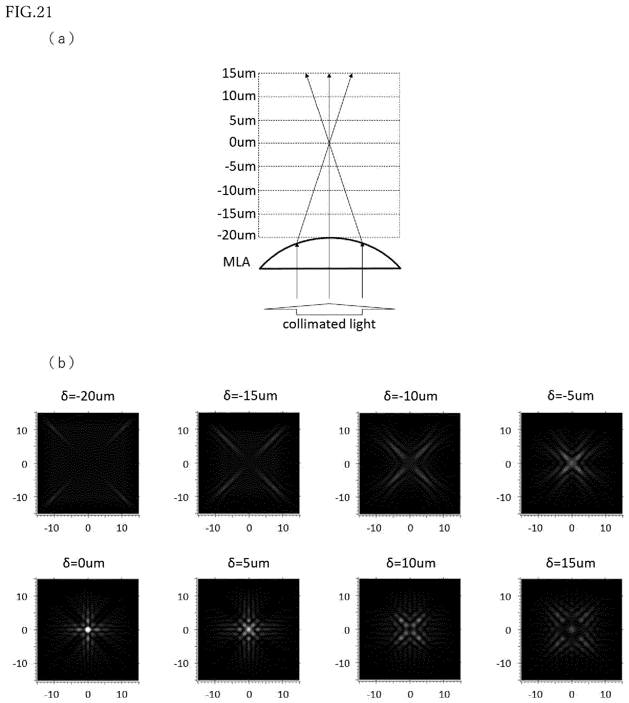

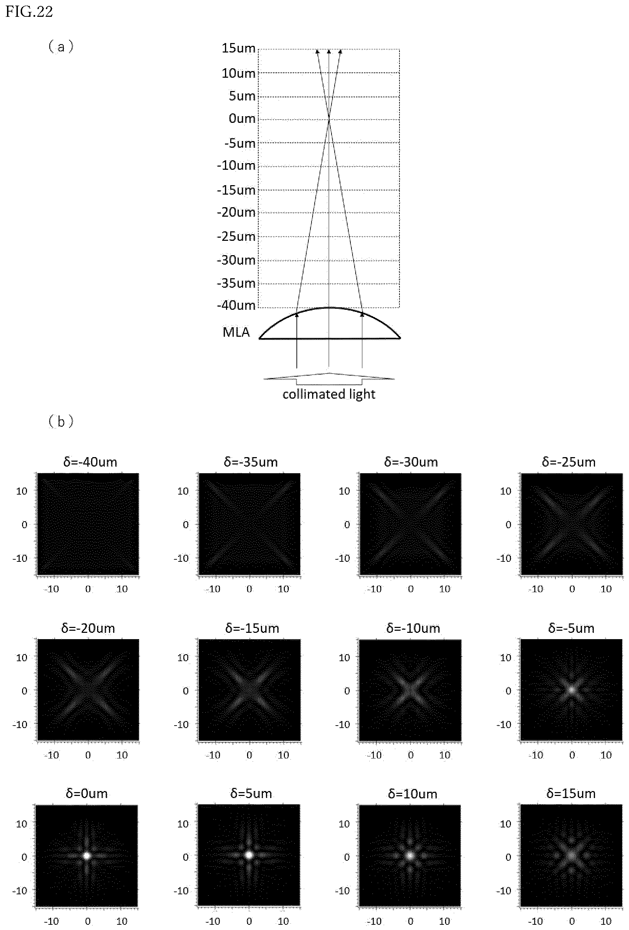

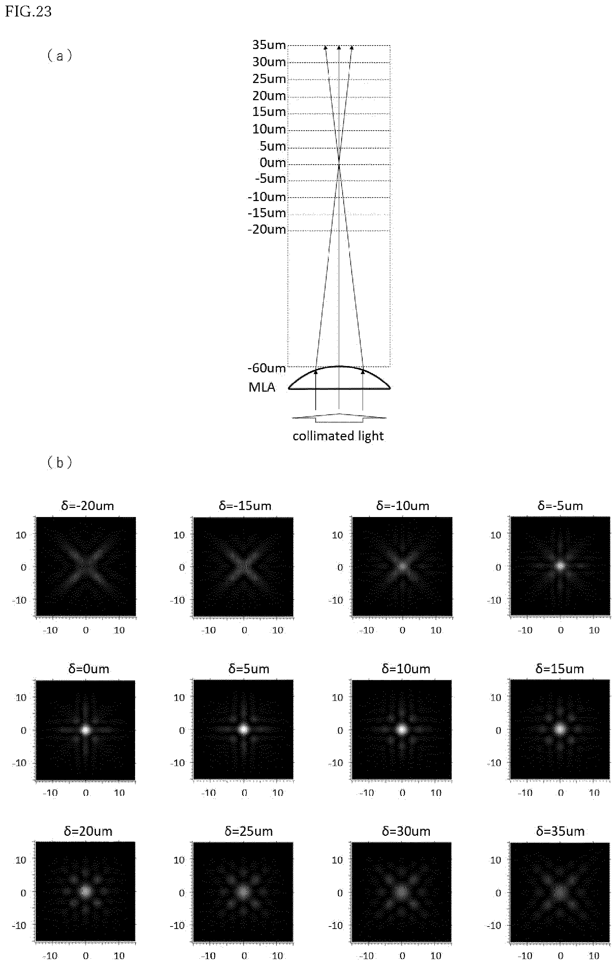

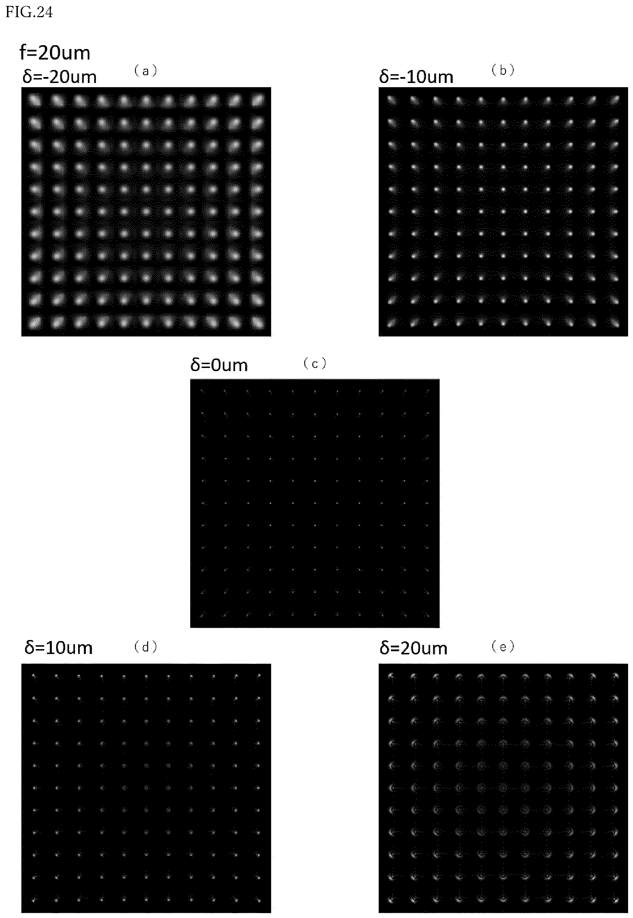

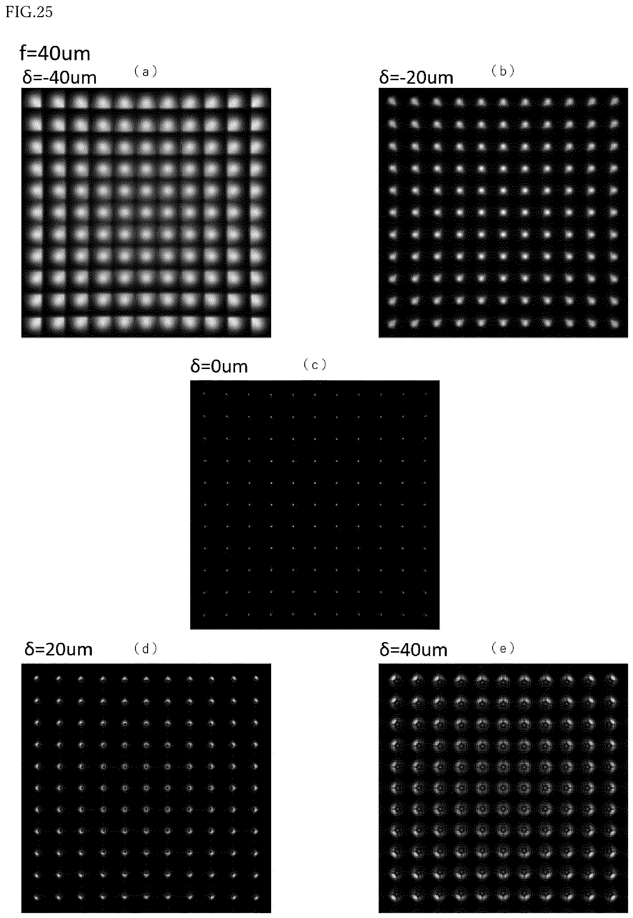

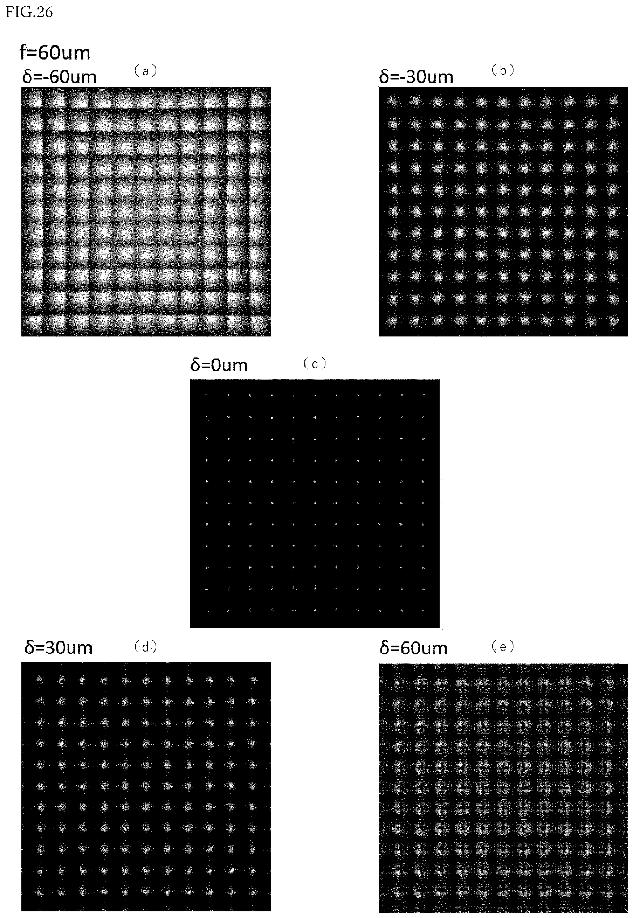

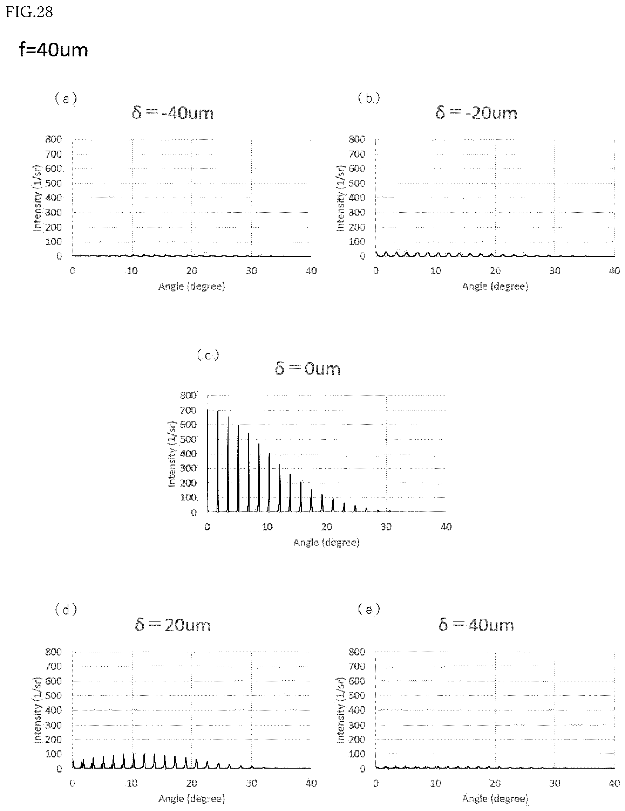

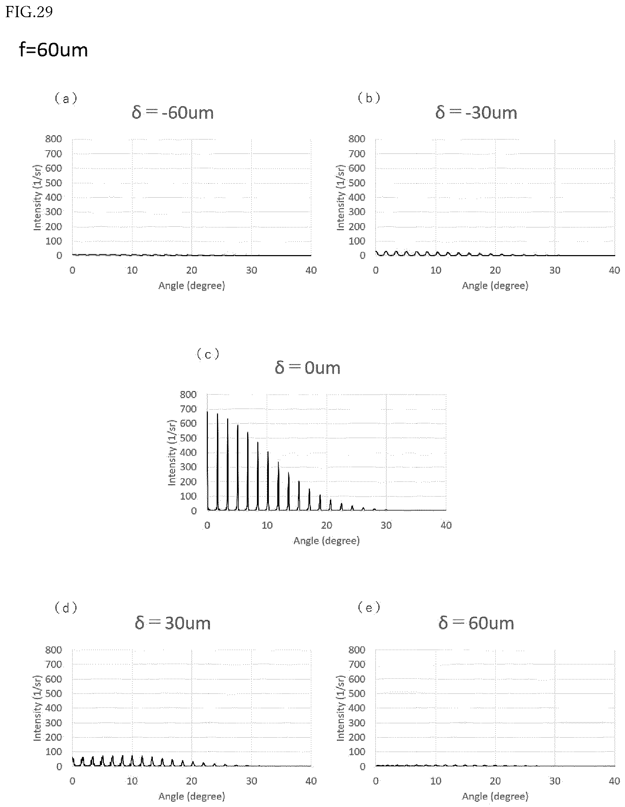

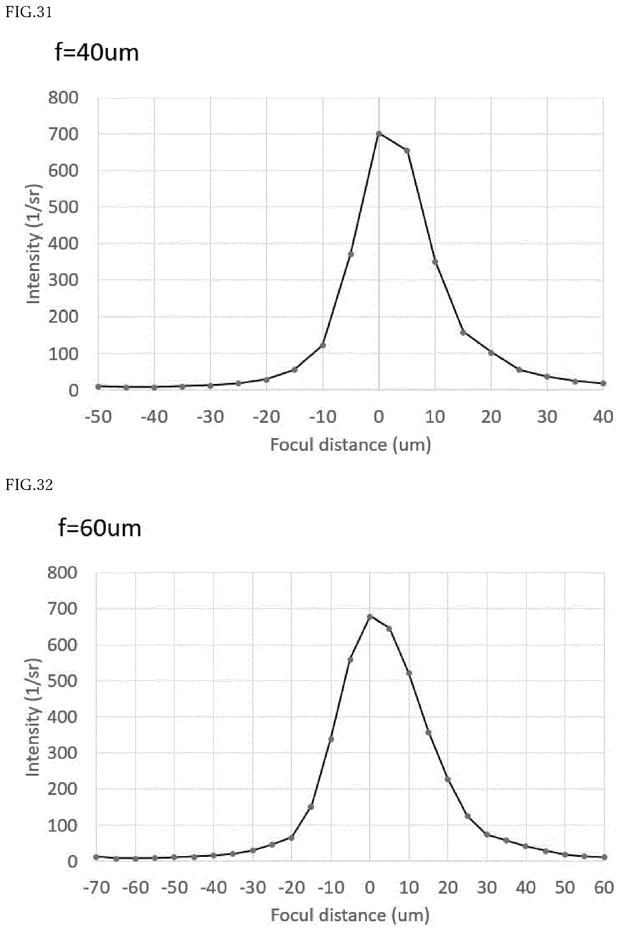

The emitting unit 1 was a singular light source that emits light which has a wavelength of 940 nm (X = 0.94) and which is Gaussian distributed light as illustrated in FIG. 16. The optical element 2 had the plurality of lenses 21 arranged tetragonally at the pitch $P_1$ that is 30 $\mu$m ($P_1$ = 30) as illustrated in FIG. 2, and had the refractive index of 1.5. Moreover, the lens surface was made as rotationally symmetric in such a way that the curvature becomes consistent in the x-axis direction and in the y-axis direction. Furthermore, as illustrated in FIG. 21 to FIG. 23, three kinds of the lenses 21 that had respective focal distances f which are 20 $\mu$m, 40 $\mu$m and 60 $\mu$m were applied. Note that $n_k$ in the formula 3 was set to be 2. FIG. 24 to FIG. 32 illustrate simulation results using the optical simulation software BeamPROP (available from Synopsys Inc.). Such a simulation was a 3D calculation result that has the depthwise direction in FIG. 2 taken into consideration.

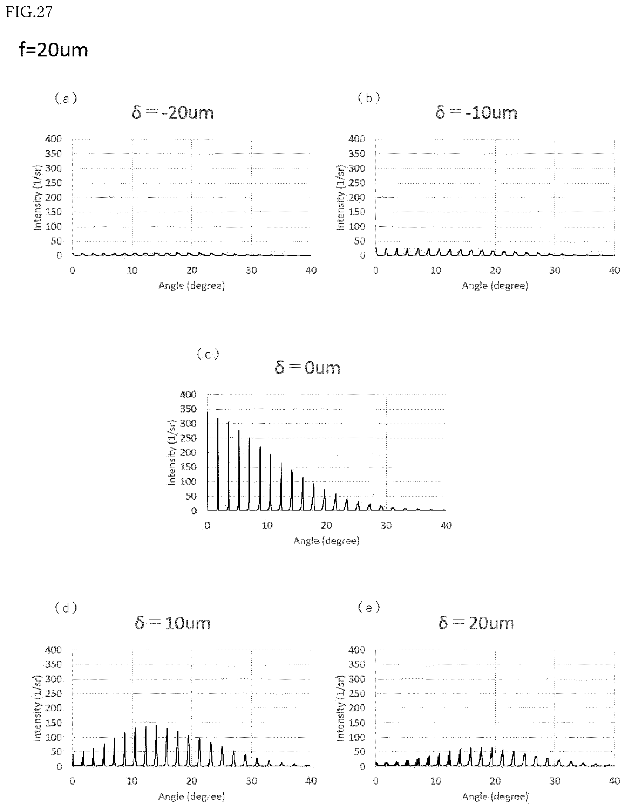

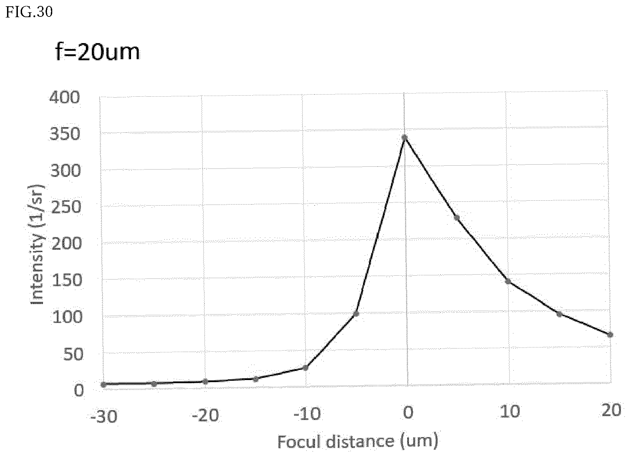

FIG. 24 to FIG. 26 each illustrate a projection image ahead from the optical element by 50 cm when $\delta$ of the formula 18 was changed variously for the three kinds of the lenses. Moreover, FIG. 27 to FIG. 29 each show a light intensity distribution when $\delta$ of the formula 18 was changed variously for the three kinds of the lenses. Furthermore, FIG. 30 to FIG. 32 each illustrate the maximum light intensity in each light intensity distribution relative to the value of $\delta$ for the three kinds of the lenses.

Note that the horizontal axis in FIG. 27 to FIG. 29 represents a light distribution angle, and the vertical axis therein represents a light intensity at a far field when the power of the light source is defined as 1. Moreover, the horizontal axis in FIG. 30 to FIG. 32 represents $\delta$, and the vertical axis therein represents a light intensity at a far field when the power of the light source is defined as 1.

In view of the simulation results, it becomes clear that the optical element 2 that satisfies the formula 1 has a clear peak, and has a large light intensity at the peak in comparison with a case in which the formula A is satisfied. Moreover, it also becomes clear that, when the formula 2 is satisfied, the light intensity at the peak becomes the maximum.

[Third Simulation]

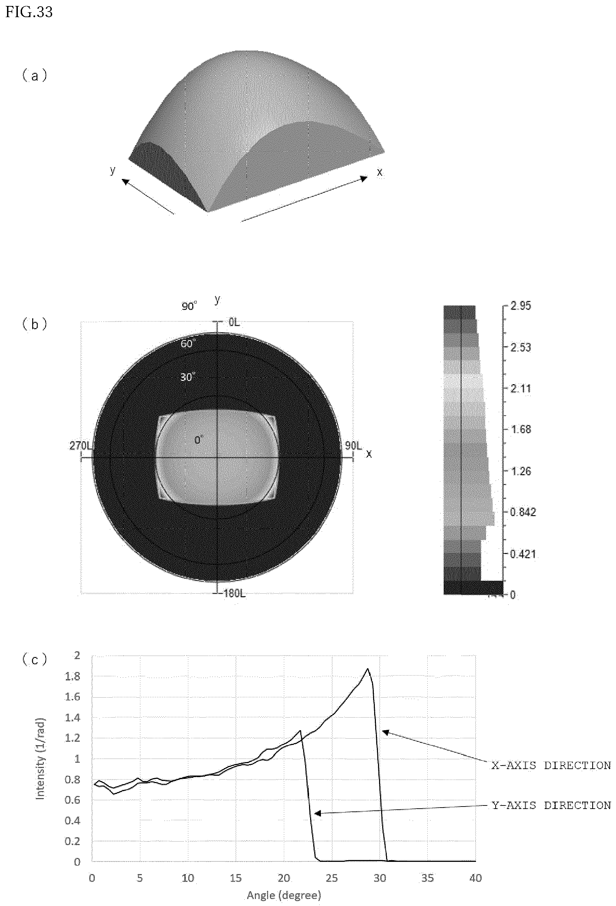

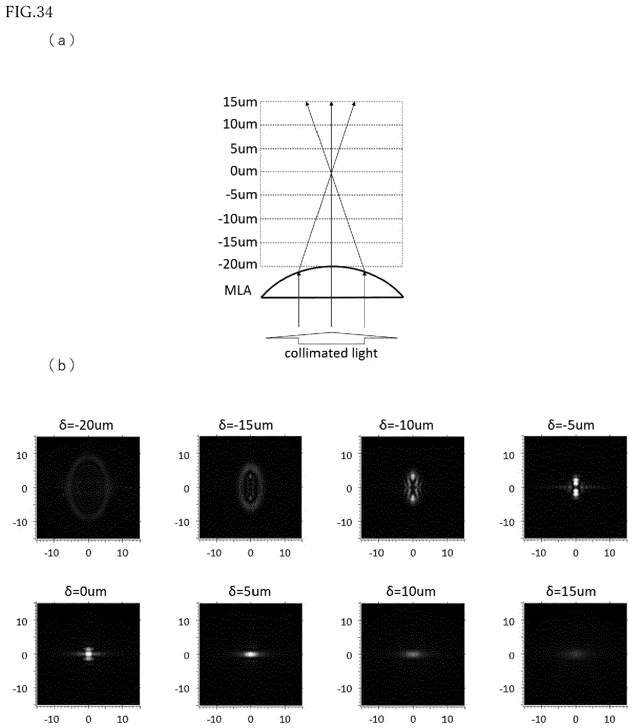

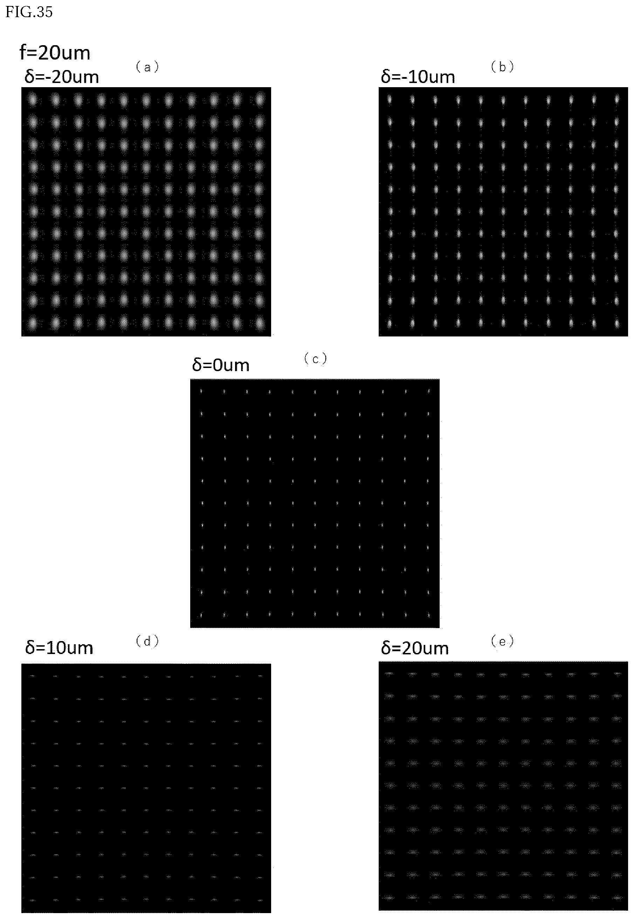

The emitting unit 1 was a singular light source that emits light which has a wavelength of 940 nm ($\lambda$ = 0.94) and which is Gaussian distributed light as illustrated in FIG. 16. The optical element 2 had the plurality of lenses 21 arranged tetragonally at the pitch $P_1$ that is 30 $\mu$m ($P_1$ = 30) as illustrated in FIG. 2, and had the refractive index of 1.5. Moreover, the shape of the lens 21 was a square in a planar view with each side being 30 $\mu$m, and with a height being 16.26 $\mu$m as illustrated in part (a) of FIG. 33. Furthermore, the lens surface was made as an aspheric surface that is not rotationally symmetric in such a way that the curvature differs in the x-axis direction and in the y-axis direction. Part (b) of FIG. 33 is a projection drawing of a distributed light distribution at a far field when collimated light was caused to enter the optical element. Still further, part (c) of FIG. 33 illustrates a distributed light distribution at a far field relative to an angle in the x-axis direction and in the y-axis direction. Yet still further, as illustrated in FIG. 34, the applied lens 21 had the focal distance f that is 20 $\mu$m. Part (b) of FIG. 34 is a projection drawing of outgoing light when collimated light was caused to enter the lens 21. Note that the way of concentrating lights differs in the x-axis direction and in the y-axis direction, but a point where the lights were concentrated maximally was taken as a focal position (0 $\mu$m). Moreover, $n_k$ in the formula 18 was set to be 2. FIG. 35 to FIG. 38 each illustrate simulation results using the optical simulation software BeamPROP (available from Synopsys Inc.). Such a simulation was a 3D calculation result that has the depthwise direction in FIG. 2 taken into consideration.

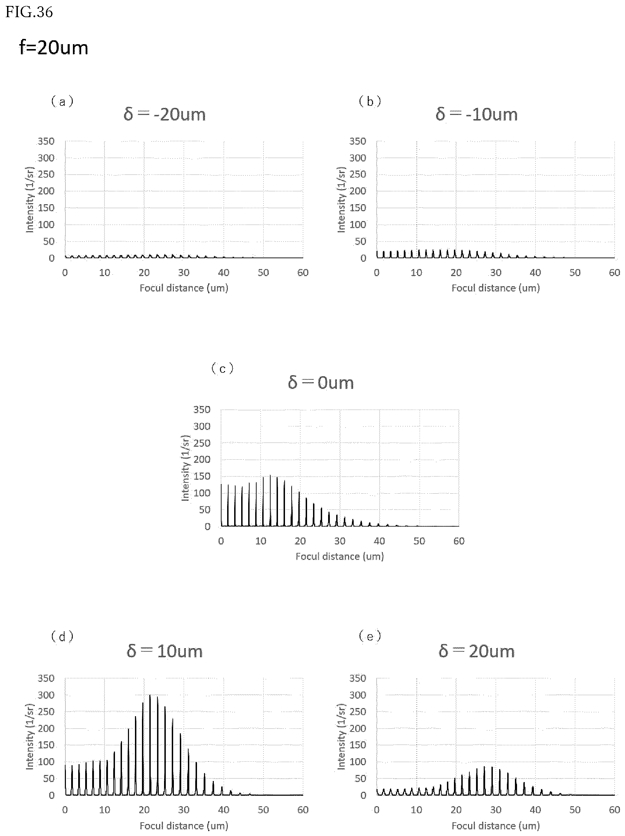

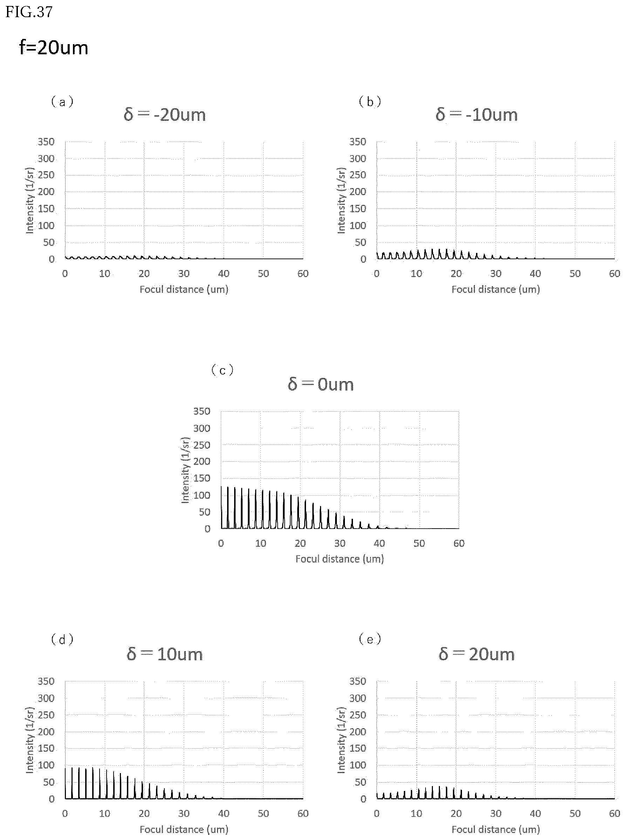

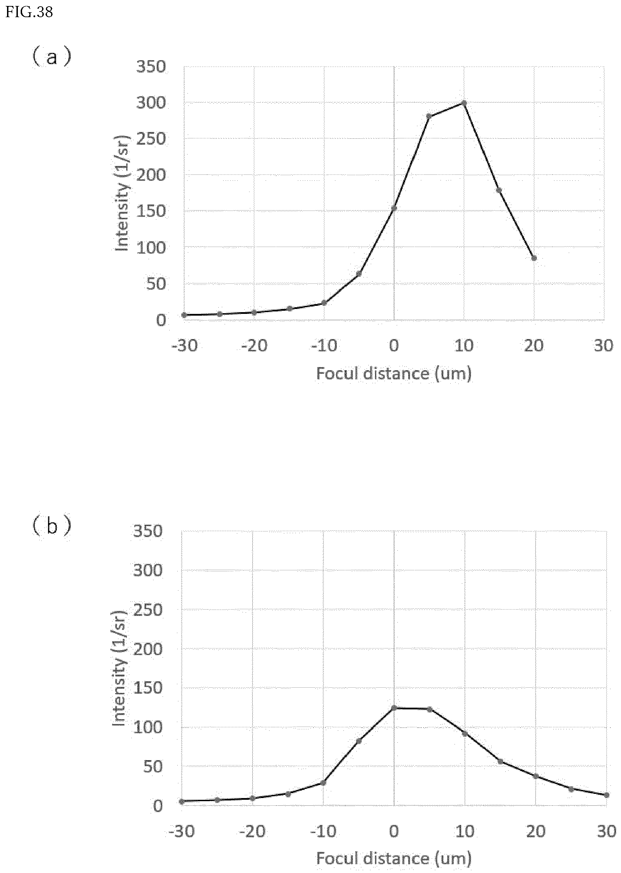

FIG. 35 illustrates a projection image ahead from the optical element by 50 cm when $\delta$ of the formula 18 was changed variously. Moreover, FIG. 36 illustrates a light intensity distribution in the x-axis direction when $\delta$ of the formula 18 was changed variously. Furthermore, FIG. 37 illustrates a light intensity distribution in the y-axis direction when $\delta$ of the formula 18 was changed variously. Still further, FIG. 38 illustrates the maximum light intensity of each light intensity distribution in the x-axis direction and in the y-axis direction relative to the value of $\delta$.

Note that the horizontal axis in FIG. 36 to FIG. 37 represents a light distribution angle, and the vertical axis therein represents a light intensity at a far field when the power of the light source was defined as 1. Moreover, the horizontal axis in FIG. 38 represents $\delta$, and the vertical axis therein represents a light intensity at a far field when the power of the light source was defined as 1.

In view of the simulation results, it becomes clear that the optical element 2 that satisfies the formula 18 has a clear peak, and has a large light intensity at the peak in comparison with a case in which the formula A is satisfied.

Moreover, it also becomes clear that, since the non-rotationally symmetric lens that has a different curvature in the x-axis direction and in the y-axis direction was applied, the sufficient light intensity can be accomplished as far as the formula 18 is satisfied although the position where the light intensity of the peak becomes the maximum differs in the x-axis direction and in the y-axis direction.

[First Example]

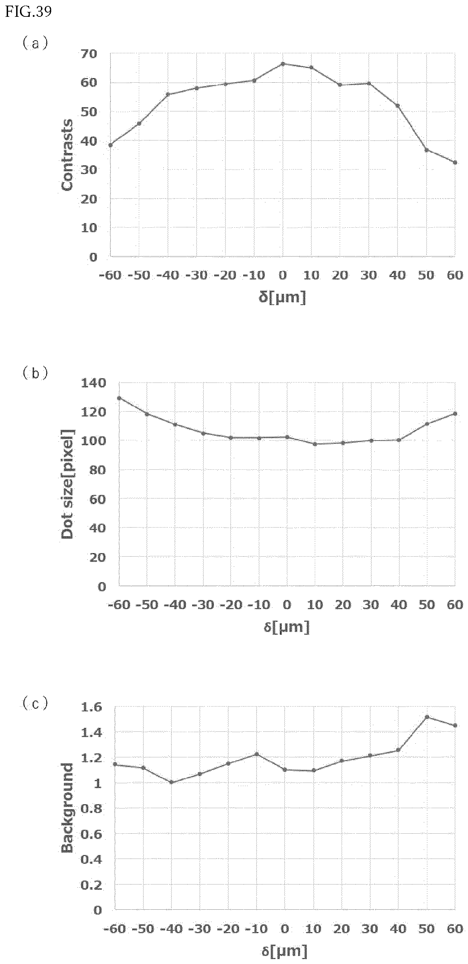

As for the emitting unit 1, a VCSEL that has the light sources each emitting light which has a wavelength of 945 nm ($\lambda$ = 0.945) and which is a bat-wing distributed light was applied, and such light sources are arranged tetragonally at a pitch that is 32 $\mu$m. The resonator length of the VCSEL converted in air was 30 $\mu$m. The optical element 2 which has a plurality of lenses 21 arranged tetragonally at a pitch $P_1$ that is 32 $\mu$m ($P_1$ = 32) and which has the refractive index that is 1.53 was applied. Moreover, the shape of the lens 21 was a square in a planar view with each side being 32 $\mu$m, and with a height being 17 $\mu$m. Furthermore, the lens surface was made as an aspheric surface in such a way that the curvature differs in the x-axis direction and in the y-axis direction. Still further, a focal distance f of the applied lens 21 was 20 $\mu$m. Yet still further, the distance between the emitting unit 1 and the focal position 9 of the optical element 2 was set to be 1084 $\mu$m, and the contrast of a dot pattern and the dot size were checked when a difference $\delta$ from such a distance was changed variously. Part (a) of FIG. 39 shows a result when the dot contrast at the center position was measured with a dot pattern being projected on a screen apart from the optical element by 1.5 m. Part (b) of FIG. 39 shows the result when the dot size was measured, and part (c) of FIG. 39 shows the result when the background was measured.

As shown in FIG. 39, it becomes clear that, within the range of $-30 \leq \delta \leq 30$, i.e., within an error range that is similar to the resonator length, the contrast and the dot size hardly change.

REFERENCE SIGNS LIST

| | |
|---|---|
| 1 | Emitting unit |
| 2 | Optical element |
| 3 | Bottom member |
| 4 | Side member |
| 9 | Focal position |
| 10 | Light source |
| 21 | Lens |
| 51 | Upper-end-side bonding layer |
| 52 | Lower-end-side bonding layer |
| 51a | Bonding adhesive |
| 52a | Bonding adhesive |

**Claims**

1.   An optical system device comprising:

an optical element that comprises lenses which have a focal distance f, allow light with a wavelength $\lambda$ to pass through, and are arranged periodically at a pitch P;
an emitting unit that comprises a light source which emits the light with the wavelength $\lambda$ to the plurality of lenses;
a bottom member that fastens the emitting unit;
a side member that fastens the optical element and the bottom member with each other; and
either one of or both of an upper-end-side bonding layer that bonds the optical element and an upper end of the side member with each other or a lower-end-side bonding layer that bonds the bottom member and a lower end of the side member,
wherein when a distance between the emitting unit and a focal position of the optical element is defined as $L_1$, n is a natural number greater than equal to 1, the distance $L_1$ satisfies the following formula.

$$\frac{n\,P^{2}}{2\lambda} - f < L_{1} < \frac{n\,P^{2}}{2\lambda} + f$$

2. The optical system device according to claim 1, wherein when a height from an upper surface of the bottom member to an emitting surface of the emitting unit is defined as $H_0$, a height $H_1$ from the upper surface of the bottom member to the upper end of the side member satisfies the following formula, and a thickness $\delta 1$ of the upper-end-side bonding layer is $0 < \delta 1 < f$.

$$\frac{(n-1)\,P^{2}}{2\lambda} + f + H_{0} < H_{1} < \frac{n\,P^{2}}{2\lambda} + f + H_{0}$$

3. The optical system device according to claim 2, wherein the height $H_1$ satisfies the following formula, and the thickness 61 of the upper-end-side bonding layer is $0 < \delta 1 < f$.

$$\frac{n\,P^{2}}{2\lambda} + H_{0} < H_{1} < \frac{n\,P^{2}}{2\lambda} + f + H_{0}$$

4. The optical system device according to claim 2, wherein:

   the light source is a VCSEL that has a resonator length t which is a converted distance in a medium between the emitting unit and the optical element; and
   the height $H_1$ satisfies the following formula, and the thickness $\delta 1$ of the upper-end-side bonding layer is $0 < \delta 1 < t$.

$$\frac{n\,P^{2}}{2\lambda} + f - t + H_{0} < H_{1} < \frac{n\,P^{2}}{2\lambda} + f + H_{0}$$

5. The optical system device according to claim 1, wherein when a height from an upper surface of the bottom member to an emitting surface of the emitting unit is defined as $H_0$, a height $H_2$ from the lower end of the side member and a lower surface of the optical element satisfies the following formula.

$$\frac{(n-1)\,P^{2}}{2\lambda} + f + H_{0} < H_{2} < \frac{n\,P^{2}}{2\lambda} + f + H_{0}$$

6. The optical system device according to claim 5, wherein the height $H_2$ satisfies the following formula, and a thickness $\delta 2$ of the lower-end-side bonding layer is $0 < \delta 2 < f$.

$$\frac{n\,P^{2}}{2\lambda} + H_{0} < H_{2} < \frac{n\,P^{2}}{2\lambda} + f + H_{0}$$

7. The optical system device according to claim 5, wherein:

   the light source is a VCSEL that has a resonator length t which is a converted distance in a medium between the emitting unit and the optical element; and
   the height $H_2$ satisfies the following formula, and the thickness $\delta 2$ of the lower-end-side bonding layer is $0 < \delta 2 < t$.

$$\frac{n\,P^2}{2\lambda} + f - t + H_0 < H_2 < \frac{n\,P^2}{2\lambda} + f + H_0$$

8. The optical system device according to any one of claims 1 to 8, further comprising a mask which is placed between the emitting unit and the optical element, and which diffuses or absorbs light reflected on a surface of the optical element.

9. The optical system device according to any one of claims 1 to 8, wherein an electrode of the emitting unit is placed at a position that does not reflect again, to the optical element, reflected light by a surface of the optical element.

10. A manufacturing method for manufacturing an optical system device that comprises an optical element that has lenses which have a focal distance f, allow light with a wavelength $\lambda$ to pass through, and are arranged periodically at a pitch P, an emitting unit that includes a light source which emits the light with the wavelength $\lambda$ to the plurality of lenses, a bottom member that fastens the emitting unit, and a side member that fastens the optical element and the bottom member with each other, the method comprising:

an upper-end-side bonding adhesive placing process to place a bonding adhesive between the optical element and an upper end of the side member or a lower-end-side bonding adhesive placing process to place a bonding adhesive between the bottom member and a lower end of the side member;
a distance adjusting process to adjust a distance between the emitting unit and the optical element by depressing the bonding adhesive in such a way that, when a distance between the emitting unit and a focal position of the optical element is defined as $L_1$, and n is a natural number greater than or equal to 1, the distance $L_1$ satisfies the following formula;

$$\frac{n\,P^2}{2\lambda} - f < L_1 < \frac{n\,P^2}{2\lambda} + f$$

and a bonding adhesive curing process to cure the bonding adhesive with the distance $L_1$ being maintained.

11. The optical system device manufacturing method according to claim 10, further comprising, prior to the distance adjusting process, a side member forming process to form the side member on the bottom member in such a way that, when a height from an upper surface of the bottom member to an emitting surface of the emitting unit is defined as $H_0$, a height $H_1$ from the upper surface of the bottom member to the upper end of the side member satisfies the following formula.

$$\frac{(n-1)\,P^2}{2\lambda} + f + H_0 < H_1 < \frac{n\,P^2}{2\lambda} + f + H_0$$

12. The optical system device manufacturing method according to claim 11, wherein:

in the side member forming process, the side member is formed on the bottom member in such a way that the height $H_1$ satisfies the following formula;

$$\frac{n\,P^2}{2\lambda} + H_0 < H_1 < \frac{n\,P^2}{2\lambda} + f + H_0$$

and in the distance adjusting process, the bonding adhesive placed in the upper-end-side bonding adhesive placing process is depressed in such a way that a thickness $\delta 1$ of the bonding adhesive becomes $0 < \delta 1 < f$.

13. The optical system device manufacturing method according to claim 11, wherein:

the light source is a VCSEL that has a resonator length t which is a converted distance in a medium between the emitting unit and the optical element;

in the side member forming process, the side member is formed on the bottom member in such a way that the height $H_1$ satisfies the following formula;

$$\frac{n\,P^2}{2\lambda} + f - t + H_0 < H_1 < \frac{n\,P^2}{2\lambda} + f + H_0$$

and in the distance adjusting process, the bonding adhesive placed in the upper-end-side bonding adhesive placing process is depressed in such a way that the thickness $\delta 1$ of the bonding adhesive becomes $0 < \delta 1 < t$.

14. The optical system device manufacturing method according to claim 10, further comprising, prior to the distance adjusting process, a side member forming process to form the side member on the optical element in such a way that, when a height from an upper surface of the bottom member to an emitting surface of the emitting unit is defined as $H_0$, a height $H_2$ from the lower end of the side member and a lower surface of the optical element satisfies the following formula.

$$\frac{(n-1)\,P^2}{2\lambda} + f + H_0 < H_2 < \frac{n\,P^2}{2\lambda} + f + H_0$$

15. The optical system device manufacturing method according to claim 11, wherein:

in the side member forming process, the side member is formed on the optical element in such a way that the height $H_2$ satisfies the following formula;

$$\frac{n\,P^2}{2\lambda} + H_0 < H_2 < \frac{n\,P^2}{2\lambda} + f + H_0$$

and in the distance adjusting process, the bonding adhesive placed in the lower-end-side bonding adhesive placing process is depressed in such a way that a thickness $\delta 2$ of the bonding adhesive becomes $0 < \delta 2 < t$.

16. The optical system device manufacturing method according to claim 11, wherein:

the light source is a VCSEL that has a resonator length t which is a converted distance in a medium between the emitting unit and the optical element;

in the side member forming process, the side member is formed on the optical element in such a way that the height $H_2$ satisfies the following formula;

$$\frac{n\,P^2}{2\lambda} + f - t + H_0 < H_2 < \frac{n\,P^2}{2\lambda} + f + H_0$$

and in the distance adjusting process, the bonding adhesive placed in the lower-end-side bonding adhesive placing process is depressed in such a way that the thickness $\delta 2$ of the bonding adhesive becomes $0 < \delta 2 < t$.

17. The optical system device manufacturing method according to claim 10, wherein in the distance adjusting process, the bonding adhesive is depressed until a contrast of a dot pattern obtained by emitting light from the emitting unit to the optical element becomes greater than or equal to a predetermined value so as to adjust the distance between the emitting unit and the optical element.

FIG. 1

FIG.2

FIG.3

FIG.4

FIG.5

（a）

0.0271

（b）

A:B:C:D:E:F=2:1:1:1:1:1  0.03    A:B:C:D:E:F=1:2:1:1:1:1  0.024   A:B:C:D:E:F=1:1:2:1:1:1  0.0233

A:B:C:D:E:F=1:1:1:2:1:1  0.0389  A:B:C:D:E:F=1:1:1:1:2:1  0.0233  A:B:C:D:E:F=1:1:1:1:1:2  0.0285

（c）

A:B:C:D:E:F=5:1:1:1:1:1  0.0354  A:B:C:D:E:F=1:1:1:5:1:1  0.0608  A:B:C:D:E:F=1:1:1:1:1:5  0.0343

FIG.6

（a）

（b）

FIG.7

FIG.8

(a)

(b)

(c)

(d)

FIG.9

FIG.10

（a）

15    2

3    15    1    15    15

（b）

2

3    1    15  15

FIG.11

（a）

（b）

（c）

FIG.12

（a）

（b）

（c）

FIG.13

( a )

( b )

( c )

FIG.14

（a）

4

4

52a

52a

1

3

（b）

4

4

H1

52a

52a

1

3

（c）

4

4

52

H1

4

52

52

1

3

FIG.15

(a)

2

51a                                51a

4                                    4

(b)

2

51a                                51a

4                                    4

H2

4

(c)

2

51                                51

4                                    4

H2

4

FIG.16

FIG.17

（a）

Focul distance:20um   Focul distance:40um   Focul distance:60um

（b）

Focul distance:20um

collimated light

Focul distance:40um

collimated light

Focul distance:60um

collimated light

FIG.18

## f=20um

(a)

### δ=-20um

(b)

### δ=0um

(c)

FIG.19

# f=40um

（a）

## δ=-40um

（b）

## δ=0um

（c）

FIG.20

# f=60um

（a）

## δ=-60um

（b）

## δ=0um

（c）

FIG.21

（a）

（b）

δ=-20um     δ=-15um     δ=-10um     δ=-5um

δ=0um     δ=5um     δ=10um     δ=15um

FIG.22

（a）

（b）

FIG.23

（a）

MLA

collimated light

（b）

| δ=-20um | δ=-15um | δ=-10um | δ=-5um |
| δ=0um | δ=5um | δ=10um | δ=15um |
| δ=20um | δ=25um | δ=30um | δ=35um |

FIG.24

f=20um

δ=-20um （a）

δ=-10um （b）

δ=0um （c）

δ=10um （d）

δ=20um （e）

FIG.25

f=40um

(a) δ=-40um

(b) δ=-20um

(c) δ=0um

(d) δ=20um

(e) δ=40um

FIG.26

f=60um

δ=-60um （a）

δ=-30um （b）

δ=0um （c）

δ=30um （d）

δ=60um （e）

FIG.27

# f=20um

FIG.28

f=40um

（a）
δ＝-40um

（b）
δ＝-20um

（c）
δ＝0um

（d）
δ＝20um

（e）
δ＝40um

FIG.29

f=60um

（a）

δ＝-60um

（b）

δ＝-30um

（c）

δ＝0um

（d）

δ＝30um

（e）

δ＝60um

FIG.30

f=20um

FIG.31

## f=40um

FIG.32

## f=60um

FIG.33

（a）

（b）

（c）

X-AXIS DIRECTION

Y-AXIS DIRECTION

FIG.34

（a）

MLA

collimated light

（b）

δ=-20um　　　δ=-15um　　　δ=-10um　　　δ=-5um

δ=0um　　　δ=5um　　　δ=10um　　　δ=15um

FIG.35

f=20um

δ=-20um （a）

δ=-10um （b）

δ=0um （c）

δ=10um （d）

δ=20um （e）

FIG.36

**f=20um**

(a)

δ = -20um

(b)

δ = -10um

(c)

δ = 0um

(d)

δ = 10um

(e)

δ = 20um

FIG.37

## f=20um

（a）
### δ＝-20um

（b）
### δ＝-10um

（c）
### δ＝0um

（d）
### δ＝10um

（e）
### δ＝20um

FIG.38

（a）

（b）

FIG.39

（a）

（b）

（c）

## INTERNATIONAL SEARCH REPORT

| International application No. |
|---|
| **PCT/JP2022/042921** |

**A. CLASSIFICATION OF SUBJECT MATTER**

*G01S 7/481*(2006.01)i; *G02B 3/00*(2006.01)n
FI: G01S7/481 A; G02B3/00 A

According to International Patent Classification (IPC) or to both national classification and IPC

**B. FIELDS SEARCHED**

Minimum documentation searched (classification system followed by classification symbols)

G01S7/48-7/51; G01S17/00-17/95; G02B3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/229848 A1 (SCIVAX CORPORATION) 18 November 2021 (2021-11-18) paragraphs [0046], [0076], fig. 1 | 1, 8-9 |
| A | | 2-7, 10-17 |
| A | US 2021/0356844 A1 (SAMSUNG ELECTRONICS CO., LTD.) 18 November 2021 (2021-11-18) entire text, all drawings | 1-17 |
| A | JP 2020-016547 A (DENSO CORP) 30 January 2020 (2020-01-30) entire text, all drawings | 1-17 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 January 2023** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/042921**

| Patent document cited in search report | | | Publication date (day/month/year) | Patent family member(s) | | Publication date (day/month/year) |
|---|---|---|---|---|---|---|
| WO | 2021/229848 | A1 | 18 November 2021 | (Family: none) | | |
| US | 2021/0356844 | A1 | 18 November 2021 | KR 10-2021-0141036 entire text, all drawings | A | |
| JP | 2020-016547 | A | 30 January 2020 | US 2021/0173050 entire text, all drawings | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006500621 A

- WO 2017131585 A

**Non-patent literature cited in the description**

- **H. HAMAM ; LAU ARRAY.** Illuminator. *Applied Optics,* 10 May 2004, vol. 43 (14), 2888-2894